# EUROPEAN PATENT SPECIFICATION

(11) **EP 4 116 177 B1**
(45) Date of publication and mention of the grant of the patent: **21.02.2024**
(21) Application number: 22172301.8
(22) Date of filing: 09.05.2022
(51) Int. Cl.: B62J 50/21

(54) **STRADDLED VEHICLE**
GRÄTSCHSITZFAHRZEUG
VÉHICULE À ENFOURCHER

(30) Priority: 08.06.2021 JP 2021095695
(43) Date of publication of application: 11.01.2023
(73) Proprietor: Yamaha Hatsudoki Kabushiki Kaisha, Iwata-shi, Shizuoka-ken 438-8501 (JP)
(72) Inventor: Kawatoko, Shohei, Iwata-shi, Shizuoka (JP); Tanaka, Tomoki, Iwata-shi, Shizuoka (JP)
(74) Representative: Grünecker Patent- und Rechtsanwälte PartG mbB

(56) References cited:
- EP-A1- 3 301 006
- JP-A- 2010 168 031

## Description

This invention relates to a straddled vehicle having a meter.

JP 2010-168031 A discloses a two-wheeled motor vehicle. The following description shows, in parentheses, the signs used in the above prior publication. The two-wheeled motor vehicle includes an upper bracket (2), hinge rods (25), and a meter (13). The hinge rods (25) are supported by the upper bracket (2). The hinge rods (25) extend in the transverse direction of the two-wheeled motor vehicle. The meter (13) is rotatably supported by the hinge rods (25). The meter (13) is connected to the upper bracket (2) through the hinge rods (25).

Specifically, the two-wheeled motor vehicle includes a handlebar holder (12) and a meter bracket (32). The handlebar holder (12) is fixed to the upper bracket (2). The handlebar holder (12) supports the hinge rods (25). The meter bracket (32) is fixed to the meter (13). The meter bracket (32) has boss portions (34). The boss portions (34) contact the hinge rods (25). The boss portions (34) are slidable about the hinge rods (25). When the boss portions (34) slide about the hinge rods (25), the meter (13) and the meter bracket (32) rotate about the hinge rods (25).

In order to restrict the rotation of the meter (13) relative to the hinge rods (25), the two-wheeled motor vehicle further includes a guide plate (42), a locking lever (41), and a leaf spring (45). The guide plate (42) is fixed to the upper bracket (2). The guide plate (42) has a plurality of engaging grooves (53). The plurality of engaging grooves (53) are arranged circumferentially about the hinge rods (25). The locking lever (41) has a shank portion (43) and an engaging pawl (46). The shank portion (43) is supported by the meter bracket (32). The locking lever (41) is rotatable about the shank portion (43) relative to the meter bracket (32). When the locking lever (41) rotates in a first direction about the shank portion (43), the locking lever (41) engages with the guide plate (42). Specifically, when the locking lever (41) rotates in the first direction about the shank portion (43), the engaging pawl (46) is inserted into one of the engaging grooves (53). When the engaging pawl (46) engages with the guide plate (42), the locking lever (41) and the guide plate (42) restrict the rotation of the meter (13) about the hinge rods (25). When the locking lever (41) rotates in a second direction about the shank portion (43), the locking lever (41) disengages from the guide plate (42). Specifically, when the locking lever (41) rotates in the second direction about the shank portion (43), the engaging pawl (46) is extracted from the engaging groove (53). When the locking lever (41) comes off the guide plate (42), the locking lever (41) and guide plate (42) permit the meter (13) to rotate about the hinge rods (25). The leaf spring (45) applies an elastic force in the first direction about the shank portion (43) to the locking lever (41).

When changing the tilt of the meter (13), the driver of the two-wheeled motor vehicle carries out the following operation. First, the driver rotates the locking lever (41) in the second direction about the shank portion (43) against the elastic force of the leaf spring (45). Consequently, the locking lever (41) disengages from the guide plate (42). In the state of the locking lever (41) disengaged from the guide plate (42), the driver rotates the meter (13) about the hinge rods (25) to change the tilt of the meter (13). After the driver adjusts the tilt of the meter (13), the driver releases the locking lever (41). The locking lever (41) rotates in the first direction about the shank portion (43) by the elastic force of the leaf spring (45). The locking lever (41) engages with the guide plate (42) again. This restricts rotation of the meter (13) about the hinge rods (25). That is, the meter (13) is positioned. In a state where the meter (13) is connected to the upper bracket (2), the tilt of the meter (13) can be changed. When changing the tilt of the meter (13), there is no need to separate the meter (13) from the upper bracket (2).

In order to support the meter (13) rotatably, the straddled vehicle includes the hinge rods (25). In order to restrict the rotation of the meter (13) relative to the hinge rods (25), the straddled vehicle includes the guide plate (42), locking lever (41) and leaf spring (45). Therefore, the support construction of the meter (13) is complicated. The support construction of the meter (13) includes numerous components.

Especially, the boss portions (34) slide about the hinge rods (25). Specifically, in a state where the boss portions (34) are in contact with the hinge rods (25), the boss portions (34) rotate relative to the hinge rods (25). That is, the boss portions (34) correspond to rotating and sliding parts. The boss portions (34) are therefore required to have high durability. Especially when the hinge rods (25) are disposed in positions not overlapping the meter (13) in side view, the boss portions (34) are required to have still higher durability.

It is the object of the present invention to provide a straddled vehicle which enables changing of the tilt of a meter with a simple construction. According to the present invention said object is solved by a straddled vehicle having the features of independent claim 1. Preferred embodiments are laid down in the dependent claims.

Accordingly, it is provided the following construction. A straddled vehicle comprises:
a steering device;
a support unit supported by the steering device to be convertible between a first form and a second form; and
a meter supported by the support unit;
wherein the support unit includes:
   a first stay fixed to one of the steering device and the meter;
   a second stay fixed to the other of the steering device and the meter, and attachable to and detachable from the first stay; and
   a joining unit for joining the first stay and the second stay;
the first stay includes:
   a first seat formed on a first plane; and
   a second seat formed on a second plane different from the first plane;
when the support unit is in the first form, the first seat makes surface contact with the second stay and the joining unit fastens the first seat and the second stay;
when the support unit is in the second form, the second seat makes surface contact with the second stay, and the joining unit fastens the second seat and the second stay; and
a tilt of the meter when the support unit is in the second form is different from a tilt of the meter when the support unit is in the first form.

The straddled vehicle includes the steering device, support unit, and meter. The support unit is supported by the steering device. The meter is supported by the support unit.

The support unit is convertible between the first form and second form. The tilt of the meter when the support unit is in the second form is different from the tilt of the meter when the support unit is in the first form.

Specifically, the support unit includes the first stay, second stay, and joining unit. The first stay is fixed to one of the steering device and meter. The second stay is fixed to other of the steering device and meter. The second stay is attachable to and detachable from the first stay. The joining unit joins the first stay and second stay.

The first stay includes the first seat and second seat. When the support unit is in the first form, the first seat makes surface contact with the second stay. When the support unit is in the first form, the joining unit fastens the first seat and second stay. When the support unit is in the second form, the second seat makes surface contact with the second stay. When the support unit is in the second form, the joining unit fastens the second seat and second stay. Thus, the shape of the first stay can be simplified. The shape of the second stay can also be simplified. When the support unit is in the first form, the joining unit can simply join the first stay and second stay. Also when the support unit is in the second form, the joining unit can simply join the first stay and second stay. The construction of the support unit can therefore be simplified.

The first seat is formed on the first plane. That is, the first seat is flat. Consequently, when the support unit is in the first form, the second stay is incapable of rotational sliding relative to the first stay. The second seat is formed on the second plane. That is, the second seat is flat. Consequently, also when the support unit is in the second form, the second stay is incapable of rotational sliding relative to the first stay. Therefore, the support unit does not include a rotating and sliding part. Thus, the construction of the support unit can be further simplified.

The second plane on which the second seat is formed is different from the first plane on which the first seat is formed. The support unit can therefore conveniently make the tilt of the meter when the support unit is in the second form different from the tilt of the meter when the support unit is in the first form.

As noted above, this straddled vehicle can change the tilt of the meter with a simple construction.

In the above straddled vehicle, it is preferred that:
when the support unit is in the first form, the first plane is parallel to a transverse direction of the straddled vehicle; and
when the support unit is in the second form, the second plane is parallel to the transverse direction of the straddled vehicle.

When the support unit is in the first form, the first plane is parallel to the transverse direction of the straddled vehicle. Consequently, when the support unit is in the first form, the plane of contact between the first seat and second stay is parallel to the transverse direction of the straddled vehicle. When the support unit is in the second form, the second plane is parallel to the transverse direction of the straddled vehicle. Consequently, when the support unit is in the second form, the plane of contact between the second seat and second stay is parallel to the transverse direction of the straddled vehicle. Thus, the support unit can firmly support the meter. For example, the support unit can conveniently prevent the meter from rotating about an axis parallel to the transverse direction of the straddled vehicle.

In the above straddled vehicle, it is preferred that the joining unit includes:
a first shank that penetrates the first stay and the second stay; and
a second shank that penetrates the first stay and the second stay;
when the support unit is in the first form, the first shank and the second shank are arranged in the transverse direction of the straddled vehicle, and the first shank and the second shank extend in a first direction perpendicular to the transverse direction of the straddled vehicle respectively; and
when the support unit is in the second form, the first shank and the second shank are arranged in the transverse direction of the straddled vehicle, and the first shank and the second shank extend in a second direction perpendicular to the transverse direction of the straddled vehicle respectively.

When the support unit is in the first form, the first shank and second shank are arranged in the transverse direction of the straddled vehicle. When the support unit is in the first form, the first shank and second shank extend in the first direction respectively. That is, when the support unit is in the first form, the second shank is parallel to the first shank. Further, the first direction is perpendicular to the transverse direction of the straddled vehicle. So, when the support unit is in the first form, the first shank and second shank can firmly fasten the first stay and second stay. When the support unit is in the second form, the first shank and second shank are arranged in the transverse direction of the straddled vehicle. When the support unit is in the second form, the first shank and second shank extend in the second direction respectively. That is, when the support unit is in the second form, the second shank is parallel to the first shank. Further, the second direction is perpendicular to the transverse direction of the straddled vehicle. So, also when the support unit is in the second form, the first shank and second shank can firmly fasten the first stay and second stay.

In the above straddled vehicle, it is preferred that, when the first shank and the second shank are removed from the first stay and the second stay respectively, the joining of the first stay and the second stay is cancelled, permitting the second stay free movement relative to the first stay.

When the first shank and second shank are removed from the first stay and second stay respectively, the first stay and second stay are disconnected from each other. When the first shank and second shank are removed from the first stay and second stay respectively, the first stay does not restrict movement of the second stay. Consequently, the construction of the support unit can be further simplified.

In the above straddled vehicle, it is preferred that the first stay includes:
first bores formed in the first seat; and
second bores formed in the second seat;
when the support unit is in the first form, the joining unit is inserted in the first bores;
when the support unit is in the second form, the joining unit is inserted in the second bores; and
the first bores and the second bores are separated from each other by the first seat and the second seat.

The first bores and second bores are not connected to each other. Thus, the construction of the first stay can be further simplified.

In the above straddled vehicle, it is preferred that the second stay includes a third seat;
when the support unit is in the first form, the first seat makes surface contact with the third seat, and the joining unit joins the third seat to the first seat; and
when the support unit is in the second form, the second seat makes surface contact with the third seat, and the joining unit joins the third seat to the second seat.

The second stay includes a third seat. So, when the support unit is in the first form, the first seat can conveniently make surface contact with the second stay. When the support unit is in the first form, the joining unit can conveniently join the first seat and second stay. Further, when the support unit is in the second form, the second seat can conveniently make surface contact with the second stay. When the support unit is in the second form, the joining unit can conveniently join the second seat and second stay.

In the above straddled vehicle, it is preferred that:
the first stay is constantly attached to the steering device; and
the second stay is fixed to the meter.

The first stay is constantly attached to the steering device. The steering device can therefore conveniently support the support unit. The second stay is fixed to the meter. The support unit can therefore conveniently support the meter.

In the above straddled vehicle, it is preferred that the support unit is configured to convert between the first form and the second form in a state of the first stay being attached to the steering device.

It is easy to convert the support unit from the first form to the second form. It is also easy to convert the support unit from the second form to the first form.

In the above straddled vehicle, it is preferred that:
the first stay is fixed to the meter; and
the second stay is constantly attached to the steering device.

The second stay is constantly attached to the steering device. The steering device can therefore conveniently support the support unit. The first stay is fixed to the meter. The support unit can therefore conveniently support the meter.

In the above straddled vehicle, it is preferred that the support unit is configured to convert between the first form and the second form in a state of the second stay being attached to the steering device.

It is easy to convert the support unit from the first form to the second form. It is also easy to convert the support unit from the second form to the first form.

In the above straddled vehicle, it is preferred that the second stay includes:
a third seat; and
a fourth seat;
when the support unit is in the first form, the first seat makes surface contact with the third seat, and the joining unit joins the third seat to the first seat; and
when the support unit is in the second form, the second seat makes surface contact with the fourth seat, and the joining unit joins the fourth seat to the second seat.

The second stay includes a third seat. When the support unit is in the first form, therefore, the first seat can conveniently make surface contact with the second stay. When the support unit is in the first form, the joining unit can conveniently join the first seat and second stay. The second stay includes a fourth seat. When the support unit is in the second form, therefore, the second seat can conveniently make surface contact with the second stay. When the support unit is in the second form, the joining unit can conveniently join the second seat and second stay.

In the above straddled vehicle, it is preferred that:
the first stay is fixed to the steering device; and
the second stay is fixed to the meter.

The first stay is fixed to the steering device. The steering device can therefore conveniently support the support unit. The second stay is fixed to the meter. The support unit can therefore conveniently support the meter.

In the above straddled vehicle, it is preferred that:
when the support unit is in the first form, the first stay is fixed to the steering device and the second stay is fixed to the meter; and
when the support unit is in the second form, the first stay is fixed to the steering device and the second stay is fixed to the meter.

When the support unit is in the first form, the steering device can conveniently support the support unit, and the support unit can conveniently support the meter. When the support unit is in the second form, the steering device can conveniently support the support unit, and the support unit can conveniently support the meter.

In the above straddled vehicle, it is preferred that the support unit is configured to convert between the first form and the second form in a state of the first stay being attached to the steering device.

It is easy to convert the support unit from the first form to the second form. It is also easy to convert the support unit from the second form to the first form.

In the above straddled vehicle, it is preferred that:
the second seat is in contact with the first seat;
the fourth seat is in contact with the third seat; and
a first angle formed between the first seat and the second seat is different from a second angle formed between the third seat and the fourth seat.

The difference between the first angle and second angle corresponds to a difference between the tilt of the meter when the support unit is in the first form and the tilt of the meter when the support unit is in the second form. The first angle is different from the second angle. Consequently, the tilt of the meter when the support unit is in the first form is different from the tilt of the meter when the support unit is in the second form. The support unit can therefore conveniently make the tilt of the meter when the support unit is in the second form different from the tilt of the meter when the support unit is in the first form.

In the above straddled vehicle, it is preferred that:
the first seat extends forward;
the second seat extends downward from the first seat;
when the support unit is in the first form, the third seat contacts an upper surface of the first seat, and the fourth seat is located more forward than a front surface of the second seat;
when the support unit is in the second form, the fourth seat contacts the front surface of the second seat, and the third seat is located higher than the upper surface of the first seat; and
the second angle is larger than the first angle.

When the support unit is in the first form, the second seat is conveniently prevented from interfering with the fourth seat. When the support unit is in the second form, the first seat is conveniently prevented from interfering with the third seat.

In the above straddled vehicle, it is preferred that:
the meter has an upper surface;
a tilt of the upper surface of the meter when the support unit is in the second form is nearer to horizontal than a tilt of the upper surface of the meter when the support unit is in the first form.

The support unit can conveniently make the tilt of the meter when the support unit is in the second form different from the tilt of the meter when the support unit is in the first form.

In the above straddled vehicle, it is preferred that the steering device includes:
a right front suspension;
a left front suspension; and
a top bridge connecting the right front suspension and the left front suspension;
the meter is located more forward than the top bridge;
when the support unit is in the second form, the upper surface of the meter is substantially parallel to an upper surface of the top bridge in a side view of the straddled vehicle.

When the support unit is in the second form, a sense of unity of the meter and top bridge can be improved in appearance.

In the above straddled vehicle, it is preferred that, when the support unit is in the second form, the upper surface of the meter is located substantially on an extension of the upper surface of the top bridge in the side view of the straddled vehicle.

When the support unit is in the second form, the sense of unity of the meter and top bridge can be further improved in appearance.

It is preferred that the above straddled vehicle comprises a fuel tank located behind the steering device in a side view of the straddled vehicle;
wherein, when the support unit is in the first form, at least part of the meter is located higher than an upper end of the fuel tank in the side view of the straddled vehicle; and
when the support unit is in the second form, a whole of the meter is located lower than the upper end of the fuel tank in the side view of the straddled vehicle.

When the support unit is in the second form, a silhouette may be formed with continuity from the fuel tank to the meter.

It is preferred that the above straddled vehicle comprises a headlight located lower and more forward than the meter;
wherein, when the support unit is in the first form, the meter and the headlight overlap each other in a front view of the straddled vehicle;
when the support unit is in the second form, the meter and the headlight overlap each other in the front view of the straddled vehicle;
a total length of the meter and the headlight in an up-down direction of the straddled vehicle when the support unit is in the second form is shorter than a total length of the meter and the headlight in the up-down direction of the straddled vehicle when the support unit is in the first form.

When the support unit is in the second form, a sense of unity of the meter and headlight can be improved in appearance.

For the purpose of illustrating the present teaching, there are shown in the drawings several forms which are presently preferred.
Fig. 1 is a left side view of a straddled vehicle according to an embodiment.
Fig. 2 is an enlarged left side view of a front portion of the straddled vehicle.
Fig. 3 is an enlarged left side view of the front portion of the straddled vehicle.
Fig. 4 is an enlarged front view of the front portion of the straddled vehicle.
Fig. 5 is an enlarged front view of the front portion of the straddled vehicle.
Fig. 6 is an enlarged plan view of the front portion of the straddled vehicle.
Fig. 7 is an enlarged plan view of the front portion of the straddled vehicle.
Fig. 8 is a perspective view of the front portion of the straddled vehicle.
Fig. 9 is an exploded perspective view of the front portion of the straddled vehicle.
Fig. 10 is an exploded perspective view of the front portion of the straddled vehicle.
Fig. 11 is a sectional view taken on line XI-XI of Fig. 6.
Fig. 12 is a sectional view taken on line XII-XII of Fig. 7.
Fig. 13 is an enlarged left side view of the front portion of the straddled vehicle.
Fig. 14 is a view showing a support unit in a modified embodiment.
Fig. 15 is a view showing the support unit in the modified embodiment.
Fig. 16 is a view showing the support unit in the modified embodiment.
Fig. 17 is a view showing a support unit in a modified embodiment.
Fig. 18 is a view showing the support unit in the modified embodiment.
Fig. 19 is a view showing the support unit in the modified embodiment.

A straddled vehicle 1 according to the present teaching will be described hereinafter with reference to the drawings.

### <1. Outline construction of straddled vehicle 1>

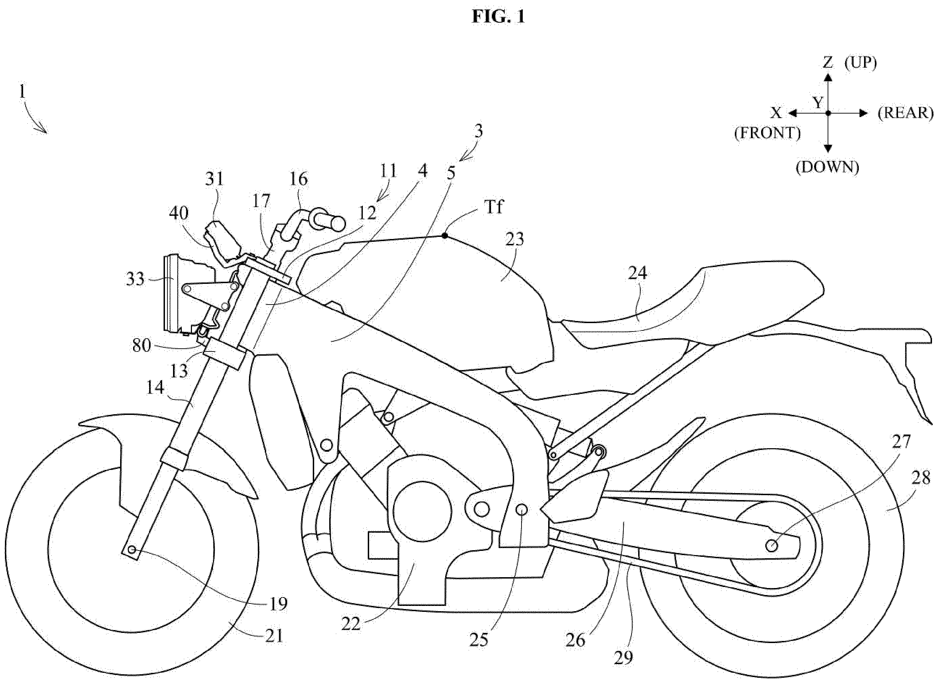

Fig. 1 is a left side view of a straddled vehicle according to an embodiment. The straddled vehicle 1 is a street type vehicle. A driver (also called a rider) mounts the straddled vehicle 1 and drives the straddled vehicle 1.

Fig. 1 shows a longitudinal direction X, a transverse direction Y, and an up-down direction Z of the straddled vehicle 1. The longitudinal direction X, transverse direction Y, and up-down direction Z are defined with reference to the driver mounted on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward" respectively mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions approximate to the longitudinal direction X. The directions approximate to the longitudinal direction X are, for example, directions at angles not exceeding 45 degrees to the longitudinal direction X. Similarly, unless otherwise stated, "rightward" and "leftward" include not only directions parallel to the transverse direction Y but also directions approximate to the transverse direction Y. Unless otherwise stated, the "upward" and "downward" include not only directions parallel to the up-down direction Z but also directions approximate to the up-down direction Z. For reference, the drawings show front, rear, up, down, right, and left, as appropriate.

This specification uses various expressions describing arrangements, which have the following meanings, respectively. The following description will be made taking the transverse direction Y for example, and the same may be applied to the longitudinal direction X and up-down direction Z.

The expression "Member Ma is located more rightward/leftward than member Mb," defines a position in the transverse direction Y of member Ma relative to member Mb, and does not define a position in the longitudinal direction X or the up-down direction Z of member Ma relative to member Mb. In the case of this expression, member Ma may, or may not, overlap member Mb in a side view of the straddled vehicle 1.

The expression "Member Ma is located rightward/leftward of member Mb," without reference to a looking direction defines a position in the transverse direction Y of member Ma relative to member Mb, a position in the longitudinal direction X of member Ma relative to member Mb, and a position in the up-down direction Z of member Ma relative to member Mb. This expression means that member Ma is located more rightward/leftward than member Mb, and that at least part of member Ma overlaps at least part of member Mb in a side view of the straddled vehicle 1.

The expression "Member Ma is located rightward/leftward of member Mb in a plan view of the straddled vehicle 1," defines a position in the transverse direction Y of member Ma relative to member Mb, and a position in the longitudinal direction X of member Ma relative to member Mb, and does not define a position in the up-down direction Z of member Ma relative to member Mb. This expression means that member Ma is located more rightward/leftward than member Mb, and that the front end of member Ma is located more forward than the rear end of member Mb, and that the rear end of member Ma is located more rearward than the front end of member Mb.

The expression "Member Ma is located rightward/leftward of member Mb in a front view of the straddled vehicle 1," defines a position in the transverse direction Y of member Ma relative to member Mb, and a position in the up-down direction Z of member Ma relative to member Mb, and does not define a position in the longitudinal direction X of member Ma relative to member Mb. This expression means that member Ma is located more rightward/leftward than member Mb, and that the upper end of member Ma is located higher than the lower end of member Mb, and that the lower end of member Ma is located lower than the upper end of member Mb.

In this specification, the expression "in a side view of the straddled vehicle 1" will be paraphrased as "in a side view of the vehicle" where appropriate. Similarly, the expression "in a plan view of the straddled vehicle 1" will be paraphrased as "in a plan view of the vehicle" where appropriate. The expression "in a front view of the straddled vehicle 1" will be paraphrased as "in a front view of the vehicle" where appropriate.

The straddled vehicle 1 includes a body frame 3. The body frame 3 has a head tube 4 and a main frame 5. The head tube 4 is located at a front portion of the straddled vehicle 1. The main frame 5 extends rearward and downward from the head tube 4 in the side view of the vehicle.

The straddled vehicle 1 includes a steering device 11. The steering device 11 is supported by the body frame 3. Specifically, the steering device 11 is supported by the head tube 4. The steering device 11 is rotatable relative to the body frame 3.

The steering device 11 has a top bridge 12, a bottom bridge 13, and a front suspension 14. The top bridge 12 is located higher than the head tube 4. The bottom bridge 13 is located lower than the top bridge 12. The bottom bridge 13 is located lower than the head tube 4. The front suspension 14 is supported by the top bridge 12 and bottom bridge 13. The front suspension 14 extends forward and downward from the top bridge 12 in the side view of the vehicle. The front suspension 14 extends to a position lower than the bottom bridge 13.

The steering device 11 has a handlebar 16. The handlebar 16 is supported by the top bridge 12. The whole of handlebar 16 is located higher than the top bridge 12, for example. The driver grasps the handlebar 16 and controls the steering device 11.

The steering device 11 has a handlebar holder 17. The handlebar holder 17 is supported by the top bridge 12, for example. The handlebar holder 17 supports the handlebar 16.

The steering device 11 has a front axle 19. The front axle 19 is located lower than the bottom bridge 13. The front axle 19 is supported by the front suspension 14.

The straddled vehicle 1 includes a front wheel 21. The front wheel 21 is supported by the steering device 11. Specifically, the front wheel 21 is supported by the front axle 19. The front wheel 21 is rotatable about the front axle 19.

The straddled vehicle 1 includes an engine 22. The engine 22 is supported by the body frame 3. Specifically, the engine 22 is supported by the main frame 5. The engine 22 is fixed to the body frame 3. The engine 22 is not swingable relative to the body frame 3. The engine 22 generates power for running the straddled vehicle 1.

At least part of the engine 22 is located below the main frame 5 in the side view of the vehicle. The engine 22 is located behind the steering device 11 in the side view of the vehicle.

The straddled vehicle 1 includes a fuel tank 23. The fuel tank 23 is supported by the body frame 3. Specifically, the fuel tank 23 is supported by the main frame 5. The fuel tank 15 stores fuel.

At least part of the fuel tank 23 is located above the main frame 5 in the side view of the vehicle. The fuel tank 23 is located behind the steering device 11 in the side view of the vehicle. The fuel tank 23 is located above the engine 22 in the side view of the vehicle.

The straddled vehicle 1 includes a seat 24. The seat 24 is supported by the body frame 3.

The seat 24 is located more rearward and higher than the engine 22. The seat 24 is located behind the fuel tank 23 in the side view of the vehicle. At least part of the seat 24 is located in the same height position as the fuel tank 23. The fuel tank 23 has an upper end Tf. The whole of seat 24 is located lower than the upper end Tf of the fuel tank 23.

The driver sits straddling the seat 24, and puts on a knee grip. The knee grip is a holding of part of the straddled vehicle 1 between the legs of the driver. The part of the straddled vehicle 1 is at least part of the main frame 5 and fuel tank 23, for example.

The straddled vehicle 1 includes a pivot shaft 25, a swing arm 26, a rear axle 27, a rear wheel 28, and a chain 29. The pivot shaft 25 is supported by the body frame 3. Specifically, the pivot shaft 25 is supported by the main frame 5. The swing arm 26 is supported by the pivot shaft 25. The swing arm 26 is swingable about the pivot shaft 25 relative to the body frame 3. The swing arm 26 extends rearward from the pivot shaft 25 in the side view of the vehicle. The rear axle 27 is supported by a rear part of the swing arm 26. The rear wheel 28 is supported by the rear axle 27. The rear wheel 28 is rotatable about the rear axle 27. The swing arm 26 and rear wheel 28 are arranged behind the engine 22 in the side view of the vehicle. The swing arm 26 and rear wheel 28 are arranged lower than the fuel tank 23 and seat 24. The chain 29 is connected to the rear wheel 28. The chain 29 transmits the power from the engine 22 to the rear wheel 28. The rear wheel 28 is rotated about the rear axle 27 by the power transmitted from the chain 29.

The straddled vehicle 1 includes a meter 31. The meter 31 is supported by the steering device 11. The meter 31 is located in front of the steering device 11 in the side view of the vehicle. The meter 31 is also called a measuring instrument. The meter 31 presents information concerning the straddled vehicle 1. The information concerning the straddled vehicle 1 includes at least either one of the speed of the straddled vehicle 1 and the rotational frequency of the engine 22, for example.

The straddled vehicle 1 includes a support unit 40. The support unit 40 is supported by the steering device 11. The support unit 40 supports the meter 31.

The straddled vehicle 1 includes a headlight 33. The headlight 33 is supported by the steering device 11. The headlight 33 is located in front of the steering device 11 in the side view of the vehicle. The headlight 33 emits light for illuminating a traveling surface ahead of the straddled vehicle 1.

The straddled vehicle 1 includes a headlight holder 80. The headlight holder 80 is supported by the steering device 11. The headlight holder 80 supports the headlight 33.

### <2. Position of meter 31 >

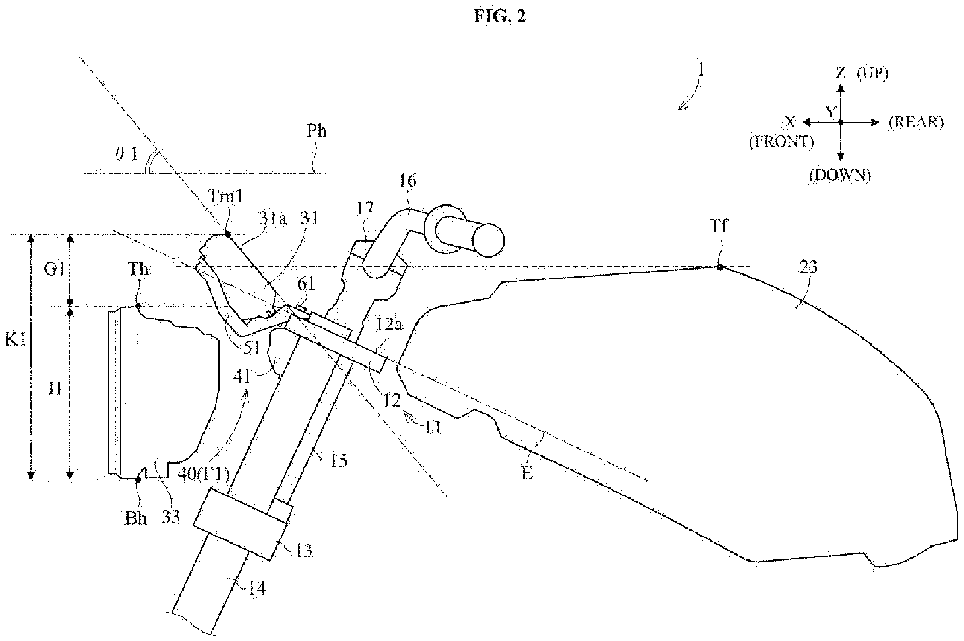

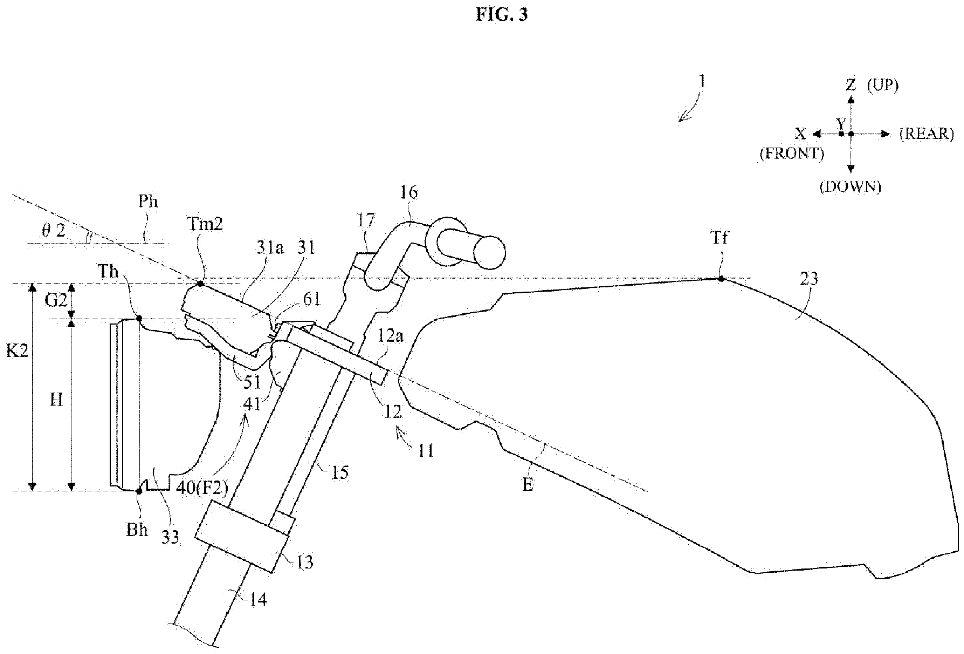

Fig. 2 is an enlarged left side view of a front portion of the straddled vehicle. Fig. 3 is an enlarged left side view of the front portion of the straddled vehicle. Figs. 2 and 3 omit illustration of the body frame 3 and headlight holder 80 respectively.

The form of the support unit 40 shown in Fig. 2 will be called the first form F1. The form of the support unit 40 shown in Fig. 3 will be called the second form F2. The second form F2 is different from the first form F1. The support unit 40 is convertible between the first form F1 and second form F2. The support unit 40 is convertible from the first form F1 to the second form F2. The support unit 40 is convertible from the second form F2 to the first form F1.

The number of forms to which the support unit 40 is convertible is only two (i.e. the first form F1 and second form F2). The support unit 40 cannot convert to any forms other than the first form F1 and second form F2.

When the support unit 40 switches between the first form F1 and second form F2, the position of the meter 31 relative to the steering device 11 is changed. The position of the meter 31 relative to the steering device 11 when the support unit 40 is in the first form F1 is different from the position of the meter 31 relative to the steering device 11 when the support unit 40 is in the second form F2.

When the support unit 40 switches between the first form F1 and second form F2, the tilt of the meter 31 is changed. The tilt of the meter 31 when the support unit 40 is in the second form F2 is different from the tilt of the meter 31 when the support unit 40 is in the first form F1.

The meter 31 has an upper surface 31a. The upper surface 31a displays the information. Whichever the support unit 40 may be, in the first form F1 or in the second form F2, the upper surface 31a extends forward and upward in the side view of the vehicle. The tilt of the upper surface 31a of the meter 31 when the support unit 40 is in the second form F2 is nearer to horizontal than when the support unit 40 is in the first form F1. In other words, the tilt of the upper surface 31 a of the meter 31 when the support unit 40 is in the first form F1 is nearer to vertical than when the support unit 40 is in the second form F2.

Fig. 2 shows an angle θ1. Angle θ1 is an angle formed between the upper surface 31a and a horizontal plane Ph when the support unit 40 is in the first form F1. Angle θ1 corresponds to the tilt of the meter 31 when the support unit 40 is in the first form F1. Fig. 3 shows an angle θ2. Angle θ2 is an angle formed between the upper surface 31a and horizontal plane Ph when the support unit 40 is in the second form F2. Angle θ2 corresponds to the tilt of the meter 31 when the support unit 40 is in the second form F2. Angle θ2 is smaller than angle θ1. Here, the horizontal plane Ph is an imaginary plane perpendicular to the up-down direction Z.

Fig. 2 shows an upper end Tm1 of the meter 31. Fig. 3 shows an upper end Tm2 of the meter 31. The upper end Tm2 when the support unit 40 is in the second form F2 is lower than the upper end Tm1 when the support unit 40 is in the first form F1.

When the support unit 40 switches between the first form F1 and second form F2, the position of the steering device 11 is unchanged. When the support unit 40 switches between the first form F1 and second form F2, the position of the top bridge 12 is unchanged. Whichever the support unit 40 may be, in the first form F1 or in the second form F2, the meter 31 is located more forward than the top bridge 12. Whichever the support unit 40 may be, in the first form F1 or in the second form F2, the whole of meter 31 is located more forward than the top bridge 12.

The top bridge 12 has an upper surface 12a. The upper surface 12a extends forward and upward in the side view of the vehicle. When the support unit 40 is in the first form F1, the upper surface 31a of the meter 31 is nearer to vertical than the upper surface 12a of the top bridge 12 in the side view of the vehicle. When the support unit 40 is in the second form F2, the upper surface 31a of the meter 31 is substantially parallel to the upper surface 12a of the top bridge 12 in the side view of the vehicle.

Figs. 2 and 3 show an extension E of the upper surface 12a of the top bridge 12 in the vehicle side view. The extension E is an imaginary straight line. When the support unit 40 is in the first form F1, the upper surface 31a of the meter 31 is located higher than the extension E in the side view of the vehicle. When the support unit 40 is in the first form F1, the whole of upper surface 31a is located higher than the extension E in the side view of the vehicle. When the support unit 40 is in the second form F2, the upper surface 31a is located near the extension E in the side view of the vehicle. When the support unit 40 is in the second form F2, the upper surface 31a is located substantially on the extension E in the side view of the vehicle. When the support unit 40 is in the second form F2, the upper surface 31a extends substantially along the extension E in the side view of the vehicle.

When the support unit 40 is in the first form F1, the upper end Tm1 is located higher than the extension E in the side view of the vehicle. When the support unit 40 is in the second form F2, the upper end Tm2 is located substantially on the extension E in the side view of the vehicle.

When the support unit 40 is in the first form F1, at least part of the meter 31 is located higher than the upper end Tf of the fuel tank 23 in the side view of the vehicle. When the support unit 40 is in the second form F2, the whole of meter 31 is located lower than the upper end Tf of the fuel tank 23 in the side view of the vehicle.

When the support unit 40 switches between the first form F1 and second form F2, the position of the headlight 33 is unchanged. The position of the headlight 33 when the support unit 40 is in the first form F1 is the same as the position of the headlight 33 when the support unit 40 is in the second form F2.

Whichever the support unit 40 may be, in the first form F1 or in the second form F2, the headlight 33 is located lower and more forward than the meter 31. Whichever the support unit 40 may be, in the first form F1 or in the second form F2, at least part of the headlight 33 is located lower and more forward than the meter 31.

When the support unit 40 is in the first form F1, the whole of headlight 33 is located lower than the upper end Tm1 of the meter 31. When the support unit 40 is in the second form F2, the whole of headlight 33 is located lower than the upper end Tm2 of the meter 31.

Figs. 2 and 3 show an upper end Th of the headlight 33. The upper end Th is located higher than the top bridge 12. The upper end Th is located lower than the upper end Tm1. The upper end Th is located lower than the upper end Tm2.

The meter 31 is close to the headlight 33 when the support unit 40 is in the second form F2, compared with when the support unit 40 is in the first form F1. A distance of separation between the meter 31 and headlight 33 is shorter when the support unit 40 is in the second form F2 than when the support unit 40 is in the first form F1.

Fig. 2 shows a length G1. Length G1 is a distance in the up-down direction Z between the upper end Tm1 and upper end Th. Fig. 3 shows a length G2. Length G2 is a distance in the up-down direction Z between the upper end Tm2 and upper end Th. Length G2 is shorter than length G1.

Figs. 2 and 3 show a lower end Bh of the headlight 33. The lower end Bh is located higher than the bottom bridge 13. Whichever the support unit 40 may be, in the first form F1 or in the second form F2, the lower end Bh is located lower than the meter 31.

Figs. 2 and 3 show a length H. Length H is a length in the up-down direction Z of the headlight 33. Length H is a distance in the up-down direction Z between the upper end Th and lower end Bh. Length H is longer than length G1. Length H is longer than length G2.

Fig. 2 shows a length K1. Length K1 is a total length of the meter 31 and headlight 33 in the up-down direction Z when the support unit 40 is in the first form F1. Length K1 is a distance in the up-down direction Z between the upper end Tm1 and lower end Bh. Length K1 is equal to or longer than length H. Fig. 3 shows a length K2. Length K2 is a total length of the meter 31 and headlight 33 in the up-down direction Z when the support unit 40 is in the second form F2. Length K2 is a distance in the up-down direction Z between the upper end Tm2 and lower end Bh. Length K2 is equal to or longer than length H. Length K2 is shorter than length K1. Length K1 is equal to or longer than 1.4 times length H, for example. Length K2 is equal to or less than 1.25 times length H, for example.

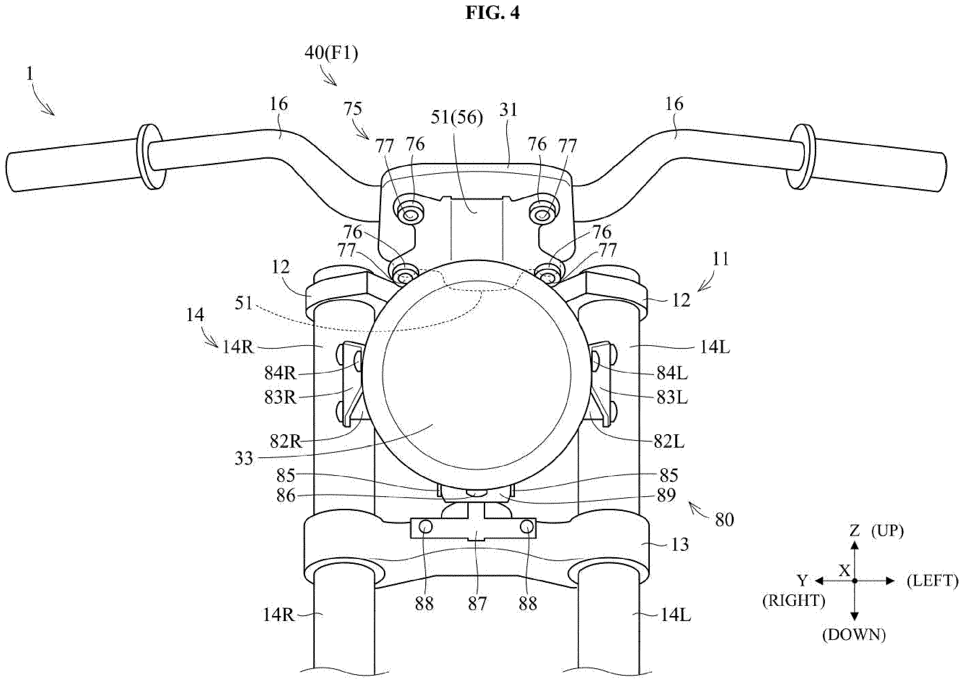

Fig. 4 is an enlarged front view of the front portion of the straddled vehicle 1. In Fig. 4, the support unit 40 is in the first form F1. When the support unit 40 is in the first form F1, the meter 31 is located above the headlight 33 in the front view of the vehicle. When the support unit 40 is in the first form F1, the meter 31 and headlight 33 overlap each other in the front view of the vehicle.

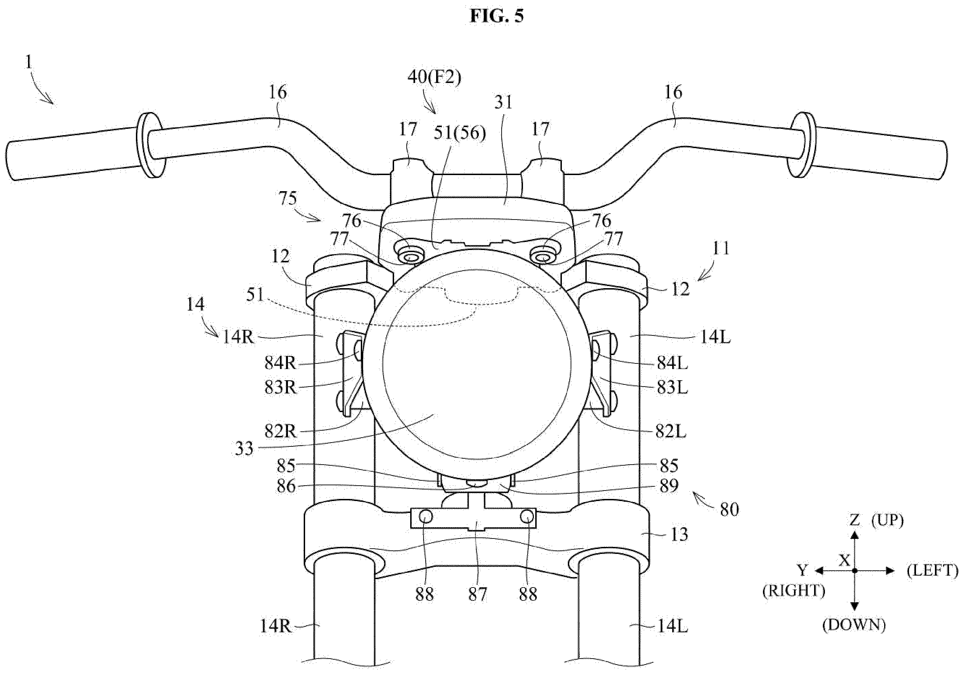

Fig. 5 is an enlarged front view of the front portion of the straddled vehicle 1. In Fig. 5, the support unit 40 is in the second form F2. When the support unit 40 is in the second form F2, the meter 31 is located above the headlight 33 in the front view of the vehicle. When the support unit 40 is in the second form F2, the meter 31 and headlight 33 overlap each other in the front view of the vehicle.

The part of the meter 31 that overlaps the headlight 33 in the front view of the vehicle when the support unit 40 is in the first form F1 will be called the first overlap part. The part of the meter 31 that overlaps the headlight 33 in the front view of the vehicle when the support unit 40 is in the second form F2 will be called the second overlap part. The second overlap part is larger than the first overlap part.

When the support unit 40 is in the second form F2, the handlebar holder 17 appears above the meter 31 in the front view of the vehicle. On the other hand, when the support unit 40 is in the first form F1, the handlebar holder 17 is hidden by the meter 31 and does not appear in the front view of the vehicle.

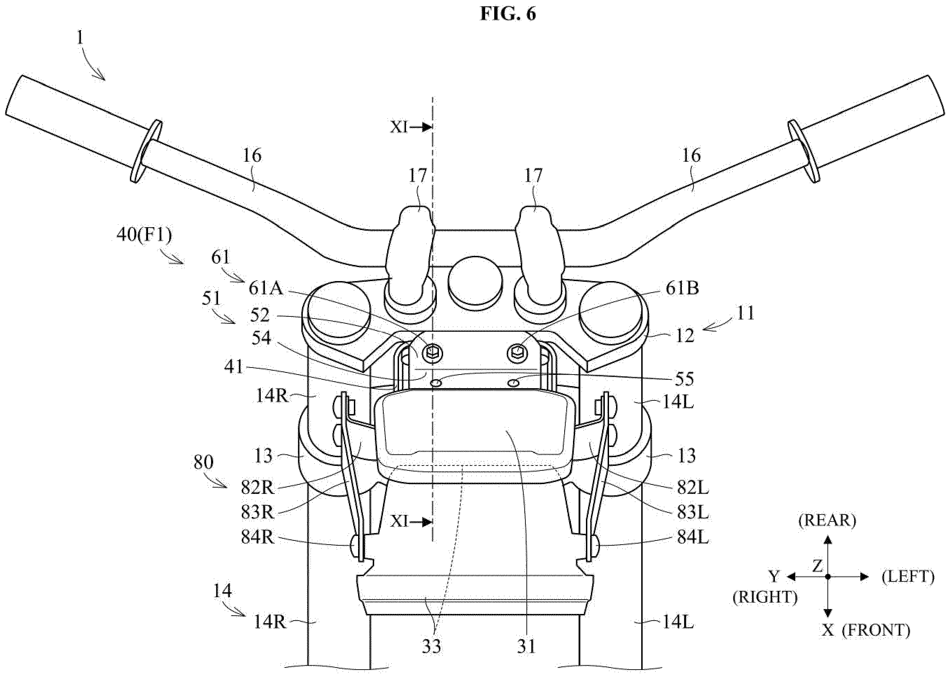

Fig. 6 is an enlarged plan view of the front portion of the straddled vehicle 1. In Fig. 6, the support unit 40 is in the first form F1. When the support unit 40 is in the first form F1, the meter 31 is located behind the headlight 33 in the plan view of the vehicle. When the support unit 40 is in the first form F1, the meter 31 is located in front of the top bridge 12 in the plan view of the vehicle. When the support unit 40 is in the first form F1, the meter 31 and headlight 33 overlap each other in the plan view of the vehicle.

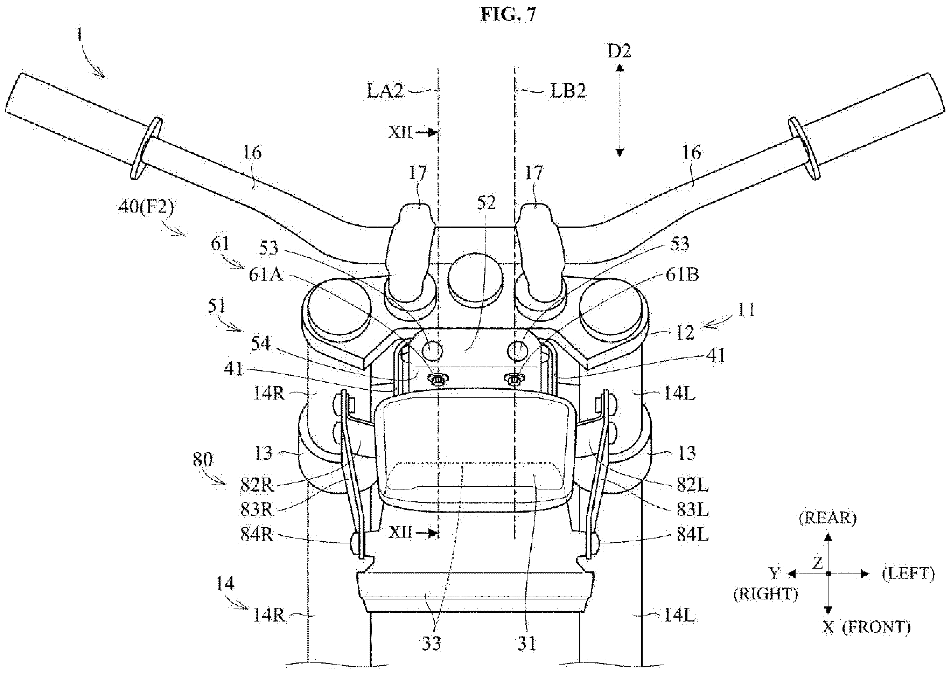

Fig. 7 is an enlarged plan view of the front portion of the straddled vehicle 1. In Fig. 7, the support unit 40 is in the second form F2. When the support unit 40 is in the second form F2, the meter 31 is located behind the headlight 33 in the plan view of the vehicle. When the support unit 40 is in the second form F2, the meter 31 is located in front of the top bridge 12 in the plan view of the vehicle. When the support unit 40 is in the second form F2, the meter 31 and headlight 33 overlap each other in the plan view of the vehicle.

The part of the meter 31 that overlaps the headlight 33 in the plan view of the vehicle when the support unit 40 is in the first form F1 will be called the third overlap part. The part of the meter 31 that overlaps the headlight 33 in the plan view of the vehicle when the support unit 40 is in the second form F2 will be called the fourth overlap part. The fourth overlap part is larger than the third overlap part.

### <3. Support structure of meter 31 >

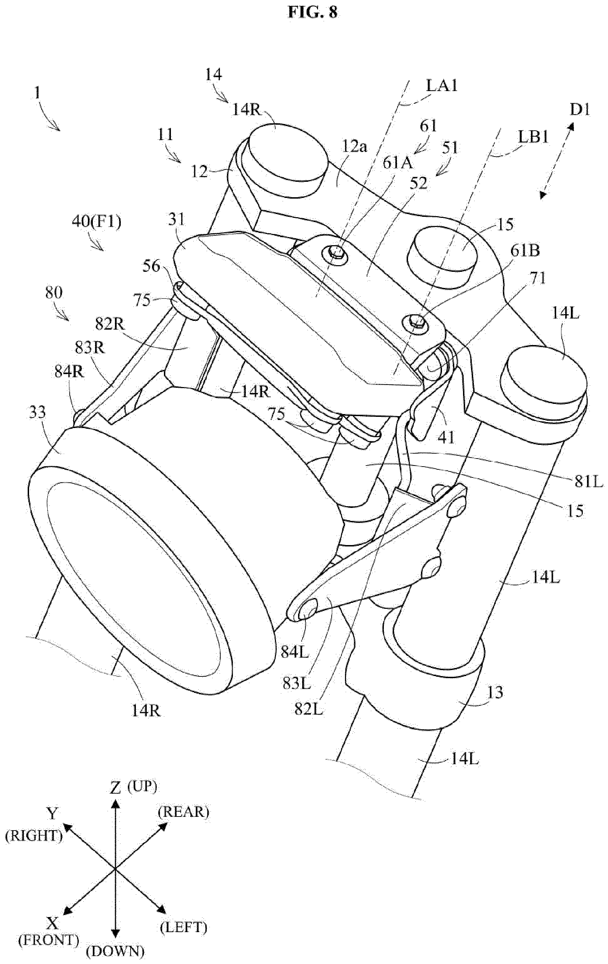

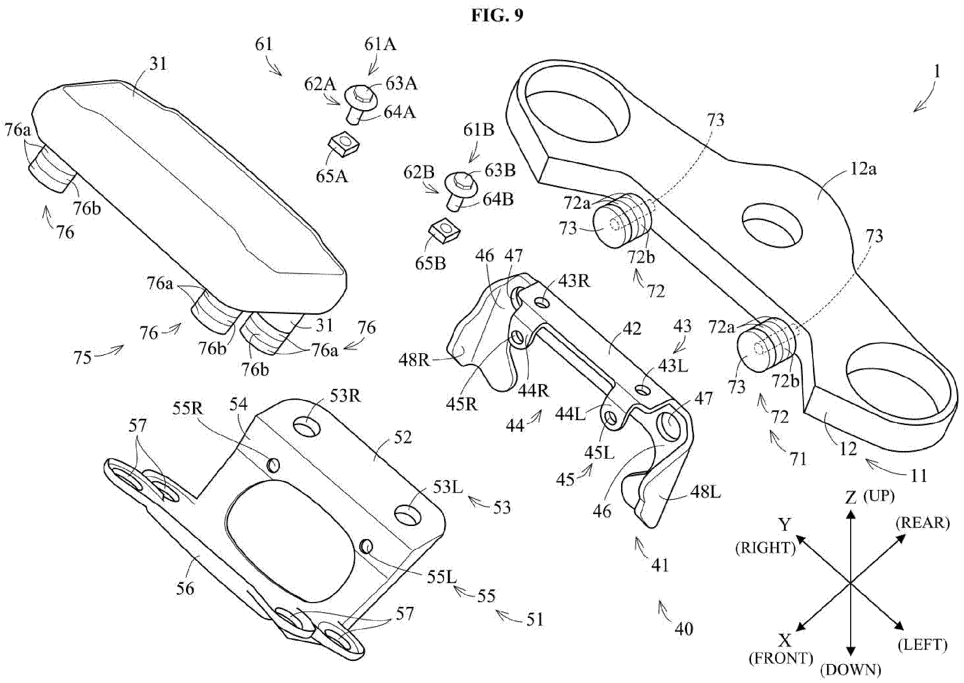

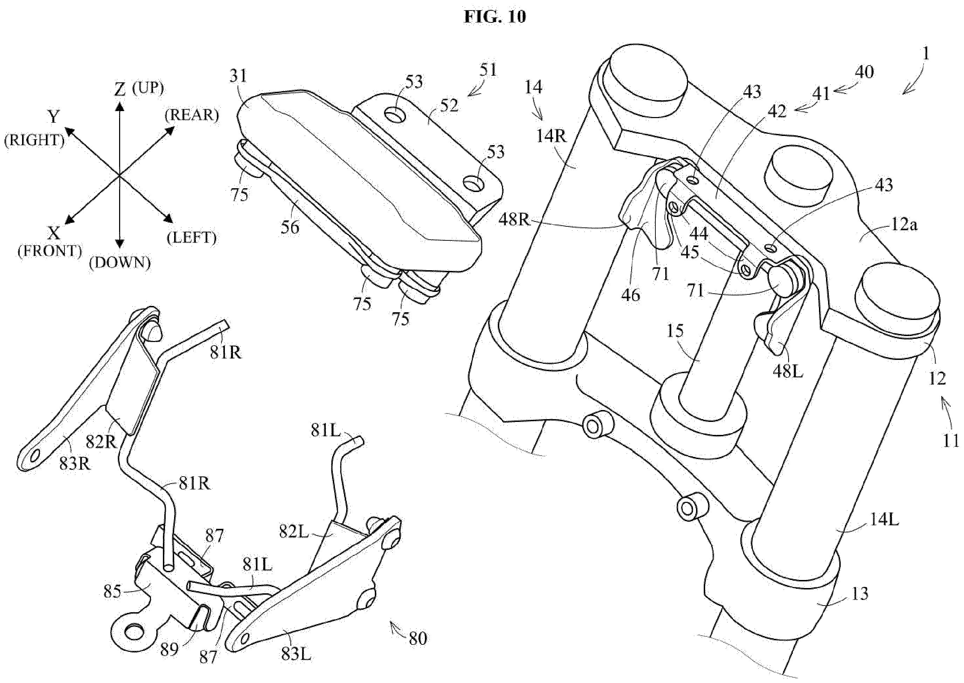

Fig. 8 is a perspective view of the front portion of the straddled vehicle 1. In Fig. 8, the support unit 40 is in the first form F1. Fig. 9 is an exploded perspective view of the front portion of the straddled vehicle 1. Fig. 10 is an exploded perspective view of the front portion of the straddled vehicle 1.

First, the construction of the steering device 11 will be described.

The front suspension 14 includes a right front suspension 14R and a left front suspension 14L. The right front suspension 14R extends forward and downward. The left front suspension 14L extends forward and downward. The left front suspension 14L is located leftward of the right front suspension 14R.

The top bridge 12 extends in the transverse direction Y. The top bridge 12 connects the right front suspension 14R and left front suspension 14L.

The upper surface 12a of the top bridge 12 is substantially flat. The upper surface 12a is parallel to the transverse direction Y.

The bottom bridge 13 extends in the transverse direction Y. The bottom bridge 13 connects the right front suspension 14R and left front suspension 14L.

Reference is made to Fig. 10. The steering device 11 includes a steering shaft 15. The steering shaft 15 is connected to the top bridge 12 and bottom bridge 13. The steering shaft 15 extends from the top bridge 12 to the bottom bridge 13. The steering shaft 15 extends forward and downward. The steering shaft 15 is located more leftward than the right front suspension 14R. The steering shaft 15 is located more rightward than the left front suspension 14L.

The steering shaft 15 is supported by the head tube 4. The steering device 11 rotates about the steering shaft 15 relative to the head tube 4.

An outline of the support unit 40 will be described.

Reference is made to Figs. 8 to 10. The support unit 40 has a first stay 41. The first stay 41 is fixed to the steering device 11. When the support unit 40 is in the first form F1, the first stay 41 is fixed to the steering device 11. When the support unit 40 is in the second form F2, the first stay 41 is fixed to the steering device 11. The first stay 41 is constantly attached to the steering device 11. Whichever the support unit 40 may be, in the first form F1 or in the second form F2, the first stay 41 is attached to the steering device 11.

The support unit 40 is constructed to convert between the first form F1 and second form F2 in the state of the first stay 41 being attached to the steering device 11. Specifically, the support unit 40 is constructed to convert from the first form F1 to the second form F2 in the state of the first stay 41 being attached to the steering device 11. The support unit 40 is constructed to convert from the second form F2 to the first form F1in the state of the first stay 41 being attached to the steering device 11.

The support unit 40 has a second stay 51. The second stay 51 is fixed to the meter 31. When the support unit 40 is in the first form F1, the second stay 51 is fixed to the meter 31. When the support unit 40 is in the second form F2, the second stay 51 is fixed to the meter 31. The second stay 51 is constantly attached to the meter 31. Whichever the support unit 40 may be, in the first form F1 or in the second form F2, the second stay 51 is attached to the meter 31.

The support unit 40 has a joining part 61. The joining part 61 joins the first stay 41 and second stay 51. When the joining part 61 joins the first stay 41 and second stay 51, the second stay 51 is fixed to the first stay 41. When the joining part 61 joins the first stay 41 and second stay 51, the second stay 51 is immovable relative to the first stay 41.

The second stay 51 is attachable to and detachable from the first stay 41. When the joining part 61 does not join the first stay 41 and second stay 51, the second stay 51 separates from the first stay 41. When the joining part 61 does not join the first stay 41 and second stay 51, the second stay 51 is movable relative to the first stay 41.

Reference is made to Figs. 9 and 10. The first stay 41 has a first seat 42 and a second seat 44. The first seat 42 and second seat 44 are not formed on the same plane. The first seat 42 and second seat 44 are formed on different planes.

When the support unit 40 is in the first form F1, the first seat 42 makes surface contact with the second stay 51. When the support unit 40 is in the first form F1, the joining part 61 fastens the first seat 42 to the second stay 51.

When the support unit 40 is in the second form F2, the second seat 44 makes surface contact with the second stay 51. When the support unit 40 is in the second form F2, the joining part 61 fastens the second seat 44 to the second stay 51.

When the support unit 40 switches between the first form F1 and second form F2, the relative position between the first stay 41 and second stay 51 is changed. The relative position between the first stay 41 and second stay 51 when the support unit 40 is in the second form F2 is different from that relative position when the support unit 40 is in the first form F1.

The support unit 40 has a first mounting part 71 and a second mounting part 75. The first mounting part 71 joins the first stay 41 and steering device 11. The second mounting part 75 joins the second stay 51 and meter 31.

The construction of the first stay 41 will be described.

Reference is made to Fig. 9. The first seat 42 is flat. The first seat 42 has a plate shape parallel to the transverse direction Y. The first seat 42 extends forward.

The first stay 41 has first bores 43. The first bores 43 are formed in the first seat 42. The first bores 43 penetrate the first seat 42.

The first bores 43 include a right first bore 43R and a left first bore 43L. The left first bore 43L is located leftward of the right first bore 43R. The right first bore 43R and left first bore 43L are not connected to each other. The right first bore 43R and left first bore 43L are separated from each other by the first seat 42.

The second seat 44 is flat. The second seat 44 has a plate shape parallel to the transverse direction Y.

The second seat 44 is connected to the first seat 42. The second seat 44 is in contact with the first seat 42. Specifically, the second seat 44 is in contact with a front portion of the first seat 42. The second seat 44 extends downward from the first seat 42. Therefore, the second seat 44 is formed on a plane different from the first seat 42.

The second seat 44 is divided into a right second seat 44R and a left second seat 44L. The right second seat 44R and left second seat 44L extend downward from the first seat 42 respectively. The left second seat 44L is located leftward of the right second seat 44R. The left second seat 44L is not in contact with the right second seat 44R.

The second seat 44 is formed integral with the first seat 42. The first seat 42 and second seat 44 are inseparable.

The first stay 41 has second bores 45. The second bores 45 are formed in the second seat 44. The second bores 45 penetrate the second seat 44.

The first bores 43 and second bores 45 are not connected to each other. The first bores 43 and second bores 45 are separated from each other by the first seat 42 and second seat 44. The first bores 43 do not extend to the second seat 44. The second bores 45 do not extend to the first seat 42.

The second bores 45 include a right second bore 45R and a left second bore 45L. The left second bore 45L is located leftward of the right second bore 45R. The right second bore 45R is formed in the right second seat 44R. The left second bore 45L is formed in the left second seat 44L.

The first stay 41 further includes a base portion 46. The base portion 46 is connected to the steering device 11. When the support unit 40 is in the first form F1, the base portion 46 is connected to the steering device 11. When the support unit 40 is in the second form F2, the base portion 46 is connected to the steering device 11.

The base portion 46 is flat. The base portion 46 has a plate shape parallel to the transverse direction Y.

The base portion 46 is connected to the first seat 42. The base portion 46 is in contact with the first seat 42. The base portion 46 is in contact with a rear part of the first seat 42. The base portion 46 extends downward from the first seat 42. The base portion 46 is located more rearward than the second seat 44.

The first stay 41 has one or more (e.g. two) mounting bores 47. The mounting bores 47 are formed in the base portion 46. The mounting bores 47 penetrate the base portion 46.

The first mounting part 71 joins the base portion 46 and steering device 11. Specifically, the first mounting part 71 is supported by the steering device 11. The first mounting part 71 supports the first stay 41.

The first mounting part 71 has a plurality of (e.g. two) elastic members 72 and a plurality of (e.g. two) fastening members 73, for example. The elastic members 72 have a tubular shape. The elastic members 72 are in form of grommet or bushing, for example. The material of the elastic members 72 is rubber, for example. The elastic members 72 are located in front of the top bridge 12. The fastening members 73 fasten the elastic members 72 to the top bridge 12. For example, the fastening members 73 penetrate the elastic members 72 and join the latter with the top bridge 12. The elastic members 72 are fixed to the top bridge 12 by the fastening members 73.

The elastic members 72 support the base portion 46. The elastic members 72 are inserted in the mounting bores 47 of the base portion 46. The elastic members 72 adhere to the base portion 46. Specifically, the elastic members 72 have outer circumferential surfaces 72a and groove parts 72b. The groove parts 72b are formed in the outer circumferential surfaces 72a. The groove parts 72b extend in the circumferential direction. The base portion 46 fits with the groove parts 72b. The base portion 46 does not contact the top bridge 12. The base portion 46 does not contact the fastening members 73.

Thus, the first stay 41 is supported by the steering device 11 through the elastic members 72. The first stay 41 is located in front of the top bridge 12. When the support unit 40 switches between the first form F1 and second form F2, the position of the first stay 41 relative to the steering device 11 does not change.

The first stay 41 has a right wall portion 48R and a left wall portion 48L. The left wall portion 48L is located leftward of the right wall portion 48R. The right wall portion 48R and left wall portion 48L are connected to the base portion 46 respectively. The right wall portion 48R and left wall portion 48L extend forward from the base portion 46 respectively. The right wall portion 48R and left wall portion 48L have a plate shape vertical to the transverse direction Y respectively.

The base portion 46, right wall portion 48R, and left wall portion 48L are formed integral with the first seat 42 and second seat 44. The first seat 42, second seat 44, base portion 46, right wall portion 48R, and left wall portion 48L are inseparable from one another.

The first stay 41 is formed of metal, for example.

The construction of the second stay 51 will be described.

Reference is made to Fig. 9. The second stay 51 has a third seat 52. The third seat 52 is flat. The third seat 52 has a plate shape parallel to the transverse direction Y. The third seat 52 extends forward.

The second stay 51 has third bores 53. The third bores 53 are formed in the third seat 52. The third bores 53 penetrate the third seat 52.

The third bores 53 include a right third bore 53R and a left third bore 53L. The left third bore 53L is located leftward of the right third bore 53R. The right third bore 53R and left third bore 53L are not connected to each other. The right third bore 53R and left third bore 53L are separated from each other by the third seat 52.

The second stay 51 has a fourth seat 54. The fourth seat 54 is flat. The fourth seat 54 has a plate shape parallel to the transverse direction Y.

The third seat 52 and fourth seat 54 are not formed on the same plane. The third seat 52 and fourth seat 54 are formed on different planes.

The fourth seat 54 is connected to the third seat 52. The fourth seat 54 is in contact with the third seat 52. Specifically, the fourth seat 54 is in contact with a front portion of the third seat 52. The fourth seat 54 extends downward from the third seat 52. Therefore, the fourth seat 54 is formed on a plane different from the third seat 52.

The fourth seat 54 is formed integral with the third seat 52. The third seat 52 and fourth seat 54 are inseparable.

The second stay 51 has fourth bores 55. The fourth bores 55 are formed in the fourth seat 54. The fourth bores 55 penetrate the fourth seat 54.

The third bores 53 and fourth bores 55 are not connected to each other. The third bores 53 and fourth bores 55 are separated from each other by the third seat 52 and fourth seat 54. The third bores 53 do not extend to the fourth seat 54. The fourth bores 55 do not extend to the third seat 52.

The fourth bores 55 include a right fourth bore 55R and a left fourth bore 55L. The left fourth bore 55L is located leftward of the right fourth bore 55R. The right fourth bore 55R and left fourth bore 55L are not connected to each other. The right fourth bore 55R and left fourth bore 55L are separated from each other by the fourth seat 54.

The second stay 51 further includes a base portion 56. The base portion 56 is connected to the meter 31. When the support unit 40 is in the first form F1, the base portion 56 is connected to the meter 31. When the support unit 40 is in the second form F2, the base portion 56 is connected to the meter 31.

The base portion 56 is connected to the fourth seat 54. The base portion 56 is in contact with the fourth seat 54. The base portion 56 is in contact with a lower part of the fourth seat 54. The base portion 56 extends forward from the fourth seat 54. The base portion 56 is located more forward than the third seat 52.

The second stay 51 has a plurality of (e.g. four) mounting bores 57. Each mounting bore 57 is formed in the base portion 56. Each mounting bore 57 penetrates the base portion 56.

The second mounting part 75 joins the base portion 56 and meter 31.

The second mounting part 75 has a plurality of (e.g. four) elastic members 76 and a plurality of (e.g. four) fastening members 77, for example. The fastening members 77 are shown in Figs. 4 and 5. The elastic members 76 have a tubular shape. The elastic members 76 are in form of grommet or bushing, for example. The material of the elastic members 76 is rubber, for example. The elastic members 76 are located below the meter 31. The fastening members 77 fasten the elastic members 76 to the meter 31. For example, the fastening members 77 penetrate the elastic members 76 and join the latter with the meter 31. The elastic members 76 are fixed to the meter 31 by the fastening members 77.

The elastic members 76 join with the base portion 56. The elastic members 76 are inserted in the mounting bores 57 of the base portion 56. The elastic members 76 adhere to the base portion 56. Specifically, the elastic members 76 have outer circumferential surfaces 76a and groove parts 76b. The groove parts 76b are formed in the outer circumferential surfaces 76a. The groove parts 76b extend in the circumferential direction. The base portion 56 fits with the groove parts 76b. The base portion 56 does not contact the meter 31. The base portion 56 does not contact the fastening members 77.

Thus, the second stay 51 supports the meter 31 through the elastic members 76. The second stay 51 (specifically the base portion 56) is located below the meter 31. When the support unit 40 switches between the first form F1 and second form F2, the position of the second stay 51 relative to the meter 31 does not change.

The base portion 56 is formed integral with the third seat 52 and fourth seat 54. The third seat 52, fourth seat 54, and base portion 56 are inseparable from one another.

The second stay 51 is formed of synthetic resin, for example.

The construction of the joining part 61 will be described.

Reference is made to Fig. 9. The joining part 61 includes a first joining part 61A and a second joining part 61B. The first joining part 61A has a first bolt 62A and a first nut 65A. The first nut 65A joins with the first bolt 62A. The first bolt 62A has a first head 63A and a first shank 64A. The first shank 64A penetrates the first stay 41 and second stay 51. The first shank 64A meshes with the first nut 65A. Similarly, the second joining part 61B has a second bolt 62B and a second nut 65B. The second nut 65B joins with the second bolt 62B. The second bolt 62B has a second head 63B and a second shank 64B. The second shank 64B penetrates the first stay 41 and second stay 51. The second shank 64B meshes with the second nut 65B.

The joining of the first stay 41 and second stay 51 will be described.

Reference is made to Fig. 6. When the support unit 40 is in the first form F1, the first joining part 61A and second joining part 61B are aligned in the transverse direction Y in a plan view of the vehicle. When the support unit 40 is in the first form F1, the joining part 61 is not inserted in the fourth bores 55. Although not shown, when the support unit 40 is in the first form F1, the joining part 61 is not inserted in the second bores 45.

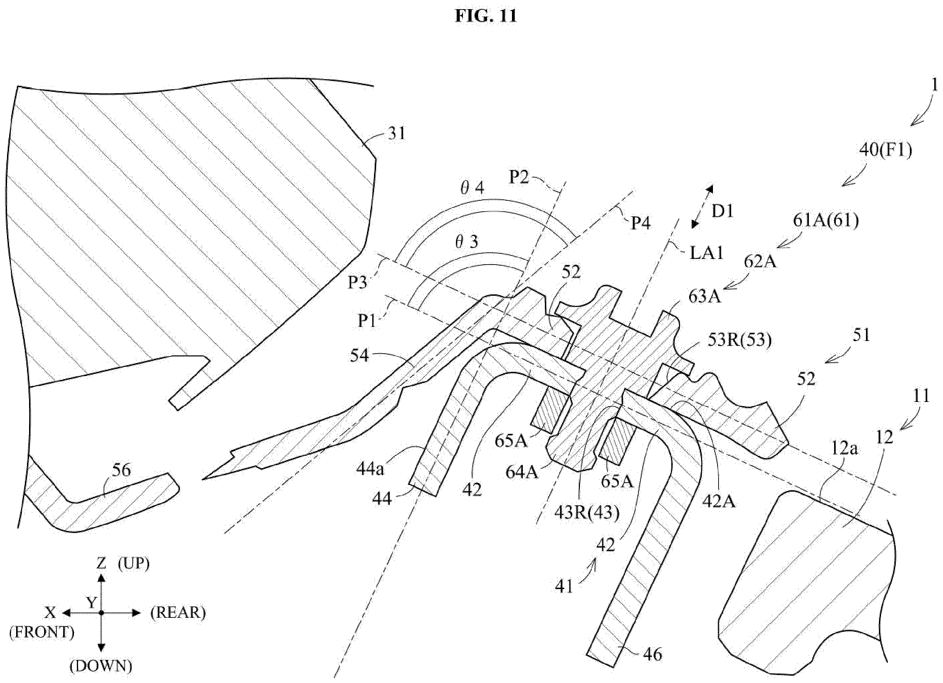

Fig. 11 is a sectional view taken on line XI-XI of Fig. 6. The support unit 40 is located in front of the top bridge 12. The first stay 41 extends forward from the top bridge 12. The second stay 51 extends forward from the first stay 41. The meter 31 is located in front of the first stay 41.

The first seat 42 extends forward. Strictly, the first seat 42 extends forward and upward. The first seat 42 is substantially parallel to the upper surface 12a of the top bridge 12.

When the support unit 40 is in the first form F1, the second stay 51 is in surface contact with the first seat 42. When the support unit 40 is in the first form F1, the third seat 52 is located above the first seat 42. When the support unit 40 is in the first form F1, the third seat 52 is in surface contact with the first seat 42. When the support unit 40 is in the first form F1, the third seat 52 is in surface contact with the upper surface 42a of the first seat 42. The upper surface 42a of the first seat 42 corresponds to a plane of contact between the first seat 42 and second stay 51 when the support unit 40 is in the first form F1.

The second seat 44 extends downward from the first seat 42. Strictly, the second seat 44 extends downward and forward.

When the support unit 40 is in the first form F1, the second stay 51 does not make surface contact with the second seat 44. When the support unit 40 is in the first form F1, the second stay 51 is separated from the second seat 44. When the support unit 40 is in the first form F1, the fourth seat 54 is located more forward than the second seat 44. When the support unit 40 is in the first form F1, the fourth seat 54 is located more forward than a front surface 44a of the second seat 44. When the support unit 40 is in the first form F1, the fourth seat 54 does not make surface contact with the second seat 44. When the support unit 40 is in the first form F1, the fourth seat 54 is separated from the second seat 44.

Fig. 11 shows a first plane P1 and a second plane P2. The first plane P1 and second plane P2 are imaginary planes respectively. The first seat 42 is formed on the first plane P1. The second seat 44 is formed on the second plane P2. The first plane P1 is different from the second plane P2. The first plane P1 is not parallel to the second plane P2.

When the support unit 40 is in the first form F1, the first plane P1 is parallel to the transverse direction Y. When the support unit 40 is in the first form F1, the second plane P2 is parallel to the transverse direction Y.

Fig. 11 shows a third plane P3 and a fourth plane P4. The third plane P3 and fourth plane P4 are imaginary planes respectively. The third seat 52 is formed on the third plane P3. The fourth seat 54 is formed on the fourth plane P4. The fourth plane P4 is different from the third plane P3. The fourth plane P4 is not parallel to the third plane P3.

When the support unit 40 is in the first form F1, the third plane P3 is parallel to the transverse direction Y. When the support unit 40 is in the first form F1, the third plane P3 is parallel to the first plane P1. When the support unit 40 is in the first form F1, the fourth plane P4 is parallel to the transverse direction Y.

Fig. 11 shows angle θ3 and angle θ4. Angle θ3 is an angle formed between the first plane P1 and second plane P2. Angle θ3 corresponds to an angle formed between the first seat 42 and second seat 44. Angle θ4 is an angle formed between the third plane P3 and fourth plane P4. Angle θ4 corresponds to an angle formed between the third seat 52 and fourth seat 54. Angle θ4 is different from angle θ3. Angle θ4 is larger than angle θ3.

Angle θ3 is an example of the first angle in the present teaching. Angle θ4 is an example of the second angle in the present teaching.

When the support unit 40 is in the first form F1, the third bores 53 are located coaxial with the first bores 43. When the support unit 40 is in the first form F1, the joining unit 61 is inserted in the first bores 43 and third bores 53. When the support unit 40 is in the first form F1, the joining unit 61 fastens the first seat 42 and third seat 52.

When the support unit 40 is in the first form F1, the first shank 64A is located in the right first bore 43R and right third bore 53R. When the support unit 40 is in the first form F1, the first shank 64A penetrates the first seat 42 and third seat 52. The first head 63A is located above the third seat 52. The first nut 65A is located below the first seat 42. The first shank 64A meshes with the first nut 65A. That is, the first bolt 62A joins with the first nut 65A. The first seat 42 and third seat 52 are fixed by the first joining part 61A.

Though not shown, when the support unit 40 is in the first form F1, the second shank 64B is located in the left first bore 43L and left third bore 53L. When the support unit 40 is in the first form F1, the second shank 64B penetrates the first seat 42 and third seat 52. The second head 63B is located above the third seat 52. The second nut 65B is located below the first seat 42. The second shank 64B meshes with the second nut 65B. That is, the second bolt 62B joins with the second nut 65B. The first seat 42 and third seat 52 are fixed by the second joining part 61B.

Fig. 11 shows axis LA1 of the first shank 64A. Axis LA1 is an imaginary straight line. When the support unit 40 is in the first form F1, axis LA1 crosses the transverse direction Y at right angles. Here, the direction of axis LA1 will be called the first direction D1.

In addition to axis LA1, Fig. 8 shows axis LB1 of the second shank 64B. Axis LB1 is an imaginary straight line. When the support unit 40 is in the first form F1, axis LB1 is located leftward of axis LA1. When the support unit 40 is in the first form F1, axis LB1 is parallel to axis LA1. Axis LB1 also extends in the first direction D1. When the support unit 40 is in the first form F1, axis LB1 also crosses the transverse direction Y at right angles.

Consequently, when the support unit 40 is in the first form F1, the first shank 64A and second shank 64B are arranged in the transverse direction Y. When the support unit 40 is in the first form F1, the first shank 64A and second shank 64B extend in the first direction D1 respectively. That is, when the support unit 40 is in the first form F1, the second shank 64B is parallel to the first shank 64A. The first direction D1 crosses the transverse direction Y at right angles.

When the support unit 40 is in the first form F1, the joining unit 61 does not join the second seat 44 and second stay 51.

Reference is made to Fig. 7. When the support unit 40 is in the second form F2, the first joining part 61A and second joining part 61B are aligned in the transverse direction Y in a plan view of the vehicle. When the support unit 40 is in the second form F2, the joining part 61 is not inserted in the third bores 53. Although not shown, when the support unit 40 is in the second form F2, the joining part 61 is not inserted in the first bores 43.

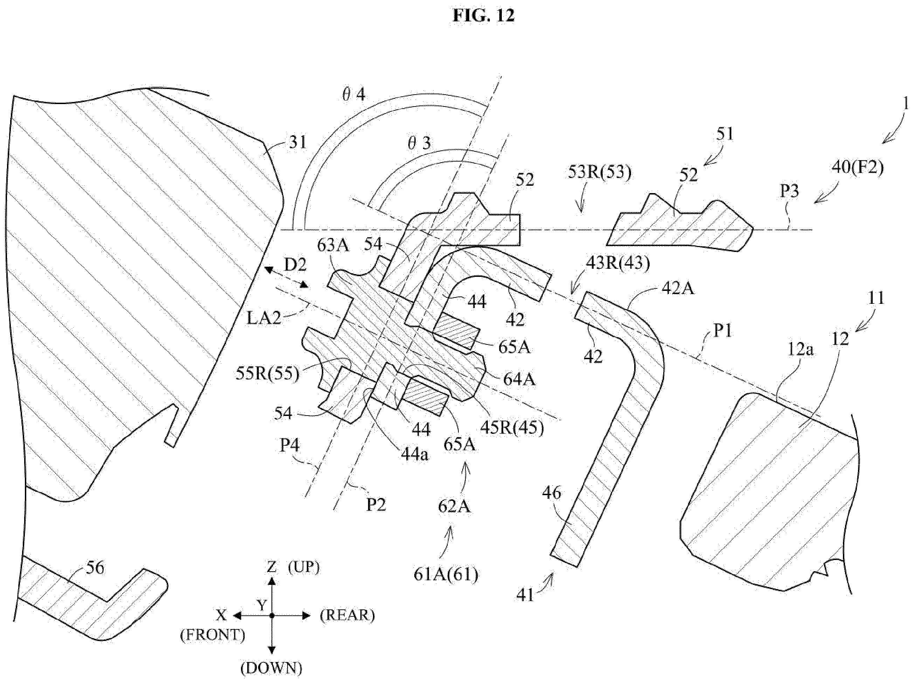

Fig. 12 is a sectional view taken on line XII-XII of Fig. 7. The support unit 40 is located in front of the top bridge 12. The first stay 41 extends forward from the top bridge 12. The second stay 51 extends forward from the first stay 41. The meter 31 is located in front of the first stay 41.

The first seat 42 extends forward. Strictly, the first seat 42 extends forward and upward. The first seat 42 is substantially parallel to the upper surface 12a of the top bridge 12.

When the support unit 40 is in the second form F2, the second stay 51 does not make surface contact with the first seat 42. When the support unit 40 is in the second form F2, the second stay 51 is separated from the first seat 42. When the support unit 40 is in the second form F2, the third seat 52 is located higher than the first seat 42. When the support unit 40 is in the second form F2, the third seat 52 is located higher than the upper surface 42a of the first seat 42. When the support unit 40 is in the second form F2, the third seat 52 is separated from the first seat 42. When the support unit 40 is in the second form F2, the third seat 52 does not make surface contact with the first seat 42.

The second seat 44 extends downward from the first seat 42. Strictly, the second seat 44 extends downward and forward.

When the support unit 40 is in the second form F2, the second stay 51 makes surface contact with the second seat 44. When the support unit 40 is in the second form F2, the fourth seat 54 is located in front of the second seat 44. When the support unit 40 is in the second form F2, the fourth seat 54 makes surface contact with the second seat 44. When the support unit 40 is in the second form F2, the fourth seat 54 makes surface contact with the front surface 44a of the second seat 44. The front surface 44a of the second seat 44 corresponds to a plane of contact between the second seat 44 and second stay 51 when the support unit 40 is in the second form F2.

When the support unit 40 is in the second form F2, the first plane P1 is parallel to the transverse direction Y. When the support unit 40 is in the second form F2, the second plane P2 is parallel to the transverse direction Y.

When the support unit 40 is in the second form F2, the third plane P3 is parallel to the transverse direction Y. When the support unit 40 is in the second form F2, the fourth plane P4 is parallel to the transverse direction Y. When the support unit 40 is in the second form F2, the fourth plane P4 is parallel to the second plane P2.

When the support unit 40 is in the second form F2, the fourth bores 55 are located coaxial with the second bores 45. When the support unit 40 is in the second form F2, the joining unit 61 is inserted in the second bores 45 and fourth bores 55. When the support unit 40 is in the second form F2, the joining unit 61 fastens the second seat 44 and fourth seat 54.

When the support unit 40 is in the second form F2, the first shank 64A is located in the right second bore 45R and right fourth bore 55R. When the support unit 40 is in the second form F2, the first shank 64A penetrates the second seat 44 and fourth seat 54. The first head 63A is located in front of the fourth seat 54. The first nut 65A is located behind the second seat 44. The first shank 64A meshes with the first nut 65A. That is, the first bolt 62A joins with the first nut 65A. The second seat 44 and fourth seat 54 are fixed by the first joining part 61A.

Though not shown, when the support unit 40 is in the second form F2, the second shank 64B is located in the left second bore 45L and left fourth bore 55L. When the support unit 40 is in the second form F2, the second shank 64B penetrates the second seat 44 and fourth seat 54. The second head 63B is located in front of the fourth seat 54. The second nut 65B is located behind the second seat 44. The second shank 64B meshes with the second nut 65B. That is, the second bolt 62B joins with the second nut 65B. The second seat 44 and fourth seat 54 are fixed by the second joining part 61B.

Fig. 12 shows axis LA2 of the first shank 64A. Axis LA2 is an imaginary straight line. When the support unit 40 is in the second form F2, axis LA2 crosses the transverse direction Y at right angles. Here, the direction of axis LA2 will be called the second direction D2. The second direction D2 is different from the first direction D1 noted hereinbefore. The second direction D2 is not parallel to the first direction D1

In addition to axis LA2, Fig. 7 shows axis LB2 of the second shank 64B. Axis LB2 is also an imaginary straight line. When the support unit 40 is in the second form F2, axis LB2 is located leftward of axis LA2. When the support unit 40 is in the second form F2, axis LB2 is parallel to axis LA2. Axis LB2 also extends in the second direction D2. When the support unit 40 is in the second form F2, axis LB2 also crosses the transverse direction Y at right angles.

Consequently, when the support unit 40 is in the second form F2, the first shank 64A and second shank 64B are arranged in the transverse direction Y. When the support unit 40 is in the second form F2, the first shank 64A and second shank 64B extend in the second direction D2 respectively. That is, when the support unit 40 is in the second form F2, the second shank 64B is parallel to the first shank 64A. The second direction D2 crosses the transverse direction Y at right angles.

When the support unit 40 is in the second form F2, the joining unit 61 does not join the first seat 42 and second stay 51.

An operation for switching the support unit 40 between the first form F1 and second form F2 will be described.

Reference is made to Figs. 8 to 10. The switching operation is executed while the straddled vehicle 1 stands still. The switching operation is executed while the engine 22 is stopped. The switching operation includes a first to a third steps.

### First Step:

The user (e.g. the driver) of the straddled vehicle 1 removes the joining unit 61. Specifically, the user extracts the first shank 64A and second shank 64B from the first stay 41 and second stay 51. When the first shank 64A and second shank 64B are removed from the first stay 41 and second stay 51, the first stay 41 and second stay 51 are disconnected. When the first shank 64A and second shank 64B are removed from the first stay 41 and second stay 51, the second stay 51 is permitted to make free movement relative to the first stay 41. The meter 31 is detached from the steering device 11.

In the first step, the user may further remove the meter 31 from the second stay 51. For example, the user may remove the second stay 51 from the second mounting part 75 (elastic members 76).

### Second step:

The user changes the position of the second stay 51 relative to the first stay 41. For example, the first seat 42 is placed in surface contact with the third seat 52. Or the second seat 44 is placed in surface contact with the fourth seat 54.

### Third step:

The user joins the first stay 41 and second stay 51 by means of the joining unit 61. The second stay 51 is fixed to the first stay 41. Consequently, the support unit 40 switches to either the first form F1 or the second form F2. The tilt of the meter 31 is changed.

When the user removes the meter 31 from the second stay 51 in the first step, the user will attach the meter 31 to the second stay 51 in the third step.

Thus, when the support unit 40 converts between the first form F1 and second form F2, it requires cancellation of the joining of the first stay 41 and second stay 51. In the state of the first stay 41 and second stay 51 joined together, the support unit 40 cannot convert between the first form F1 and second form F2. In other words, changing the tilt of meter 31 requires the meter 31 to be detached from the steering device 11. The tilt of the meter 31 cannot be changed when the meter 31 is connected to the steering device 11.

When converting the support unit 40 between the first form F1 and second form F2, there is no need to cancel the joining of the first stay 41 and steering device 11. The support unit 40 can be converted between the first form F1 and second form F2 in the state where the first mounting part 71 joins the first stay 41 and steering device 11.

### <4. Support structure of headlight 33>

The construction of the headlight holder 80 will be described.

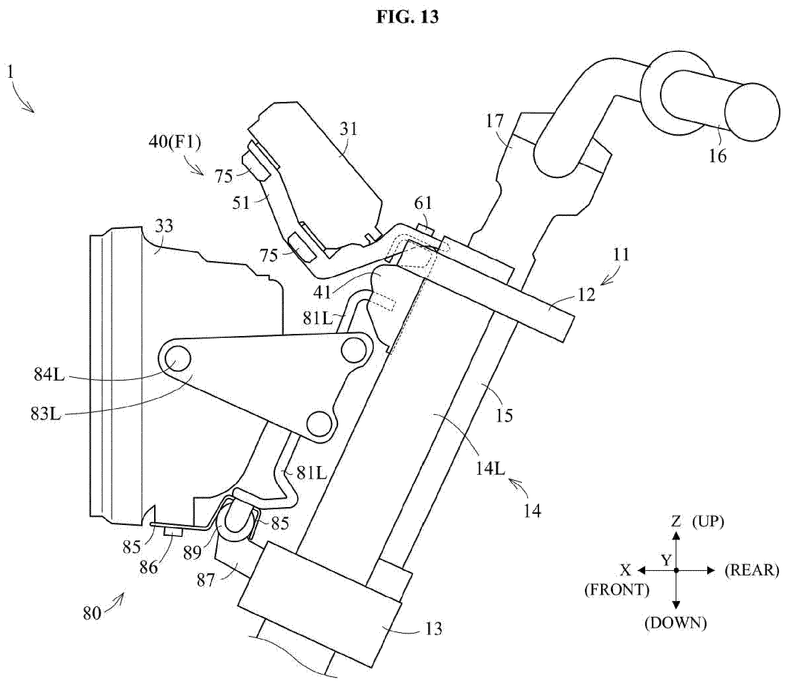

Reference is made to Figs. 4, 5, 10, and 13. Fig. 13 is an enlarged left side view of the front portion of the straddled vehicle 1. As noted hereinbefore, the headlight holder 80 is supported by the steering device 11. Specifically, the headlight holder 80 is supported by the top bridge 12 through the first stay 41. The headlight holder 80 is further supported by the bottom bridge 13.

The headlight holder 80 has a right stay 81R and a left stay 81L. The right stay 81R and left stay 81L have a rod shape respectively. The right stay 81R is fixed to the right wall portion 48R. The right stay 81R extends downward from the right wall portion 48R. The left stay 81L is located leftward of the right stay 81R. The left stay 81L is fixed to the left wall portion 48L. The left stay 81L extends downward from the left wall portion 48L.

The headlight holder 80 has a right arm 82R and a left arm 82L. The right arm 82R and left arm 82L have a plate shape respectively. The right arm 82R and left arm 82L have an angle shape respectively. The right arm 82R is supported by the right stay 81R. The right arm 82R projects rightward from the right stay 81R. The left arm 82L is supported by the left stay 81L. The left arm 82L projects leftward from the left stay 81L.

The headlight holder 80 has a right bracket 83R and a left bracket 83L. The right bracket 83R and left bracket 83R have a plate shape respectively. The right bracket 83R is supported by the right arm 82R. The right bracket 83R extends forward from the right arm 82R. The right bracket 83R extends to a right side of the headlight 33. The left bracket 83L is supported by the left arm 82L. The left bracket 83L extends forward from the left arm 82L. The left bracket 83L extends to a left side of the headlight 33.

The headlight holder 80 has a right fastening member 84R and a left fastening member 84L. The right fastening member 84R fastens the headlight 33 and right bracket 83R. The left fastening member 84L fastens the headlight 33 and left bracket 83L. The headlight 33 is fixed to the right bracket 83R and left bracket 83L by the right fastening member 84R and left fastening member 84L.

The headlight holder 80 has a bottom bracket 85. The bottom bracket 85 has a plate shape. The bottom bracket 85 has a box shape. The bottom bracket 85 is located lower than the right bracket 83R and left bracket 83L. The bottom bracket 85 is located more leftward than the right bracket 83R and more rightward than the left bracket 83L. The bottom bracket 85 is supported by the right stay 81R and left stay 81L. The bottom bracket 85 extends forward from the right stay 81R and left stay 81L. The bottom bracket 85 extends to a lower part of the headlight 33.

The headlight holder 80 has a bottom fastening member 86. The bottom fastening member 86 fastens the headlight 33 and bottom bracket 85. The headlight 33 is fixed to the bottom bracket 85 by the bottom fastening member 86.

The headlight 33 has a bottom stay 87 and two fastening members 88. The bottom stay 87 is located in front of the bottom bridge 13. Each fastening member 88 fastens the bottom stay 87 and bottom bridge 13. The bottom stay 87 is fixed to the bottom bridge 13 by the fastening members 88. The bottom stay 87 extends forward from the bottom bridge 13.

The headlight holder 80 has an elastic member 89. The elastic member 89 has a tubular shape. The elastic member 89 is supported by the bottom stay 87. The elastic member 89 supports the bottom bracket 85. The bottom bracket 85 is supported by the bottom stay 87 through the elastic member 89.

When the support unit 40 converts between the first form F1 and second form F2, there is no need to cancel the joining of the headlight 33 and steering device 11. The support unit 40 can convert between the first form F1 and second form F2 in the state where the headlight holder 80 joins the headlight 33 and steering device 11.

### <5. Advantageous effects>

The straddled vehicle 1 includes the steering device 11, support unit 40, and meter 31. The support unit 40 is supported by the steering device 11. The meter 31 is supported by the support unit 40.

The support unit 40 is convertible between the first form F1 and second form F2. The tilt of the meter 31 when the support unit 40 is in the second form F2 is different from the tilt of the meter 31 when the support unit 40 is in the first form F1.

Specifically, the support unit 40 includes the first stay 41, second stay 51, and joining unit 61. The first stay 41 is fixed to the steering device 11. The second stay 51 is fixed to the meter 31. The second stay 51 is attachable to and detachable from the first stay 41. The joining unit 61 joins the first stay 41 and second stay 51.

The first stay 41 includes the first seat 42 and second seat 44. When the support unit 40 is in the first form F1, the first seat 42 makes surface contact with the second stay 51. When the support unit 40 is in the first form F1, the joining unit 61 fastens the first seat 42 and second stay 51. When the support unit 40 is in the second form F2, the second seat 44 makes surface contact with the second stay 51. When the support unit 40 is in the second form F2, the joining unit 61 fastens the second seat 44 and second stay 51. Thus, the shape of the first stay 41 can be simplified. The shape of the second stay 51 can also be simplified. When the support unit 40 is in the first form F1, the joining unit 61 can simply join the first stay 41 and second stay 51. Also when the support unit 40 is in the second form F2, the joining unit 61 can simply join the first stay 41 and second stay 51. Thus, the construction of the joining unit 61 can be simplified. The construction of the support unit 40 can therefore be simplified.

The first seat 42 is formed on the first plane P1. That is, the first seat 42 is flat. Therefore, when the support unit 40 is in the first form F1, the second stay 51 cannot make rotational sliding relative to the first seat 42. That is, when the support unit 40 is in the first form F1, the second stay 51 is incapable of rotational sliding relative to the first stay 41. The second seat 44 is formed on the second plane P2. That is, the second seat 44 is flat. Therefore, also when the support unit 40 is in the second form F2, the second stay 51 cannot make rotational sliding relative to the second seat 44. That is, also when the support unit 40 is in the second form F2, the second stay 51 is incapable of rotational sliding relative to the first stay 41. Therefore, the support unit 40 does not include a rotating and sliding part. In other words, the support unit 40 has a construction excluding a rotating and sliding part. The support unit 40 without a rotating and sliding part is realized. Thus, the construction of the support unit 40 can be further simplified.

The second plane P2 on which the second seat 44 is formed is different from the first plane P1 on which the first seat 42 is formed. The support unit 40 can therefore conveniently differentiate the tilt of the meter 31 when the support unit 40 is in the second form F2 from the tilt of the meter 31 when the support unit 40 is in the first form F1.

As noted above, the straddled vehicle 1 can change the tilt of the meter 31 with the simple construction.

When the support unit 40 is in the first form F1, the first plane P1 is parallel to the transverse direction Y. Consequently, when the support unit 40 is in the first form F1, the upper surface 42a of the first seat 42 is parallel to the transverse direction Y. The upper surface 42a of the first seat 42 corresponds to a plane of contact between the first seat 42 and second stay 51 when the support unit 40 is in the first form F1. Consequently, when the support unit 40 is in the first form F1, the plane of contact between the first seat 42 and second stay 51 is parallel to the transverse direction Y. When the support unit 40 is in the first form F1, therefore, the second stay 51 cannot make rotational sliding relative to the first seat 42 about an axis parallel to the transverse direction Y. Thus, when the support unit 40 is in the first form F1, the support unit 40 can firmly support the meter 31. For example, when the support unit 40 is in the first form F1, the support unit 40 can conveniently prevent the meter 31 from rotating about the axis parallel to the transverse direction Y.

When the support unit 40 is in the second form F2, the second plane P2 is parallel to the transverse direction Y. Consequently, when the support unit 40 is in the second form F2, the front surface 44a of the second seat 44 is parallel to the transverse direction Y. The front surface 44a of the second seat 44 corresponds to a plane of contact between the second seat 44 and second stay 51 when the support unit 40 is in the second form F2. Consequently, when the support unit 40 is in the second form F2, the plane of contact between the second seat 44 and second stay 51 is parallel to the transverse direction Y. When the support unit 40 is in the second form F2, therefore, the second stay 51 cannot make rotational sliding relative to the first seat 42 about an axis parallel to the transverse direction Y. Thus, when the support unit 40 is in the second form F2, the support unit 40 can firmly support the meter 31. For example, when the support unit 40 is in the second form F2, the support unit 40 can conveniently prevent the meter 31 from rotating about the axis parallel to the transverse direction Y.

The joining unit 61 includes the first shank 64A and second shank 64B. The first shank 64A penetrates the first stay 41 and second stay 51. The second shank 64B penetrates the first stay 41 and second stay 51. When the support unit 40 is in the first form F1, the first shank 64A and second shank 64B are arranged in the transverse direction Y. When the support unit 40 is in the first form F1, the first shank 64A and second shank 64B extend in the first direction D1 respectively. That is, when the support unit 40 is in the first form F1, the second shank 64B is parallel to the first shank 64A. Consequently, when the support unit 40 is in the first form F1, the second shank 64B can conveniently prevent the first stay 41 from rotating about the first shank 64A relative to the second stay 51. Further, when the support unit 40 is in the first form F1, the first shank 64A can conveniently prevent the first stay 41 from rotating about the second shank 64B relative to the second stay 51. When the support unit 40 is in the first form F1, therefore, the first shank 64A and second shank 64B can conveniently prevent the first stay 41 from making rotational sliding relative to the second stay 51. Thus, when the support unit 40 is in the first form F1, the first shank 64A and second shank 64B can firmly join the first stay 41 and second stay 51.

The first direction D1 is perpendicular to the transverse direction Y. So, when the support unit 40 is in the first form F1, the first shank 64A and second shank 64B can all the more conveniently prevent the first stay 41 from making rotational sliding relative to the second stay 51 about an axis parallel to the transverse direction Y. When the support unit 40 is in the first form F1, therefore, the first shank 64A and second shank 64B can all the more conveniently prevent the first stay 41 from making rotational sliding relative to the second stay 51. Thus, when the support unit 40 is in the first form F1, the first shank 64A and second shank 64B can all the more firmly join the first stay 41 and second stay 51.

When the support unit 40 is in the second form F2, the first shank 64A and second shank 64B are arranged in the transverse direction Y. When the support unit 40 is in the second form F2, the first shank 64A and second shank 64B extend in the second direction D2 respectively. That is, when the support unit 40 is in the second form F2, the second shank 64B is parallel to the first shank 64A. Consequently, when the support unit 40 is in the second form F2, the second shank 64B can conveniently prevent the first stay 41 from rotating about the first shank 64A relative to the second stay 51. Further, when the support unit 40 is in the second form F2, the first shank 64A can conveniently prevent the first stay 41 from rotating about the second shank 64B relative to the second stay 51. When the support unit 40 is in the second form F2, therefore, the first shank 64A and second shank 64B can conveniently prevent the first stay 41 from making rotational sliding relative to the second stay 51. Thus, when the support unit 40 is in the second form F2, the first shank 64A and second shank 64B can firmly fasten the first stay 41 and second stay 51.

The second direction D2 is perpendicular to the transverse direction Y. So, when the support unit 40 is in the second form F2, the first shank 64A and second shank 64B can all the more conveniently prevent the first stay 41 from making rotational sliding relative to the second stay 51 about an axis parallel to the transverse direction Y. When the support unit 40 is in the second form F2, therefore, the first shank 64A and second shank 64B can all the more conveniently prevent the first stay 41 from making rotational sliding relative to the second stay 51. Thus, when the support unit 40 is in the second form F2, the first shank 64A and second shank 64B can all the more firmly fasten the first stay 41 and second stay 51.

When the first shank 64A and second shank 64B are removed from the first stay 41 and second stay 51 respectively, the joining of the first stay 41 and second stay 51 is cancelled. That is, when the first shank 64A and second shank 64B are removed from the first stay 41 and second stay 51 respectively, the first stay 41 and second stay 51 are disconnected. When the first shank 64A and second shank 64B are removed from the first stay 41 and second stay 51 respectively, the second stay 51 is permitted to make free movement relative to the first stay 41. That is, when the first shank 64A and second shank 64B are removed from the first stay 41 and second stay 51 respectively, the first stay 41 does not restrict movement of the second stay 51. Consequently, the construction of the support unit 40 can be further simplified.

The first stay 41 includes the first bores 43 and second bores 45. The first bores 43 are formed in the first seat 42. The second bores 45 are formed in the second seat 44. When the support unit 40 is in the first form F1, the joining unit 61 is inserted in the first bores 43. When the support unit 40 is in the first form F1, therefore, the joining unit 61 can conveniently join the first seat 42 and second stay 51. When the support unit 40 is in the second form F2, the joining unit 61 is inserted in the second bores 45. When the support unit 40 is in the second form F2, therefore, the joining unit 61 can conveniently join the second seat 44 and second stay 51.

The first bores 43 and second bores 45 are separated from each other by the first seat 42 and second seat 44. That is, the first bores 43 and second bores 45 are not connected to each other. Thus, the construction of the first stay 41 can be further simplified.

The second stay 51 includes a third seat 52. When the support unit 40 is in the first form F1, the first seat 42 makes surface contact with the third seat 52. When the support unit 40 is in the first form F1, therefore, the first seat 42 can conveniently make surface contact with the second stay 51.

When the support unit 40 is in the first form F1, the joining unit 61 joins the third seat 52 to the first seat 42. When the support unit 40 is in the first form F1, therefore, the joining unit 61 can conveniently join the first seat 42 and second stay 51.

The second stay 51 includes a fourth seat 54. When the support unit 40 is in the second form F2, the second seat 44 makes surface contact with the fourth seat 54. When the support unit 40 is in the second form F2, therefore, the second seat 44 can conveniently make surface contact with the second stay 51.

When the support unit 40 is in the second form F2, the joining unit 61 joins the fourth seat 54 to the second seat 44. When the support unit 40 is in the second form F2, therefore, the joining unit 61 can conveniently join the second seat 44 and second stay 51.

The first stay 41 is fixed to the steering device 11. The steering device 11 can therefore conveniently support the support unit 40.

When the support unit 40 is in the first form F1, the first stay 41 is fixed to the steering device 11. When the support unit 40 is in the first form F1, therefore, the support unit 40 is conveniently supported by the steering device 11.

When the support unit 40 is in the second form F2, the first stay 41 is fixed to the steering device 11. When the support unit 40 is in the second form F2, therefore, the support unit 40 is conveniently supported by the steering device 11.

The first stay 41 is constantly attached to the steering device 11. The steering device 11 can therefore conveniently support the support unit 40.

The support unit 40 is configured convertible between the first form F1 and second form F2 in the state of the first stay 41 being attached to the steering device 11. This makes it easy to convert the support unit 40 from the first form F1 to the second form F2. It is also easy to convert the support unit 40 from the second form F2 to the first form F1.

The second stay 51 is fixed to the meter 31. The support unit 40 can therefore conveniently support the meter 31.

When the support unit 40 is in the first form F1, the second stay 51 is fixed to the meter 31. When the support unit 40 is in the first form F1, therefore, the support unit 40 can conveniently support the meter 31.

When the support unit 40 is in the second form F2, the second stay 51 is fixed to the meter 31. When the support unit 40 is in the second form F2, therefore, the support unit 40 can conveniently support the meter 31.

The second seat 44 is in contact with the first seat 42. The fourth seat 54 is in contact with the third seat 52. Angle θ3 corresponds to an angle formed between the first seat 42 and second seat 44. Angle θ4 corresponds to an angle formed between the third seat 52 and fourth seat 54. The difference between angle θ3 and angle θ4 corresponds to a difference between the tilt of the meter 31 when the support unit 40 is in the first form F1 and the tilt of the meter 31 when the support unit 40 is in the second form F2. Angle θ3 is different from angle θ4. Consequently, the tilt of the meter 31 when the support unit 40 is in the first form F1 is different from the tilt of the meter 31 when the support unit 40 is in the second form F2. The support unit 40 can therefore conveniently make the tilt of the meter 31 when the support unit 40 is in the second form F2 different from the tilt of the meter 31 when the support unit 40 is in the first form F1.

The first seat 42 extends forward. The second seat 44 extends downward from the first seat 42. When the support unit 40 is in the first form F1, the third seat 52 contacts the upper surface 42a of the first seat 42, and the fourth seat 54 is located more forward than the front surface 44a of the second seat 44. On the other hand, when the support unit 40 is in the second form F2, the fourth seat 54 contacts the front surface 44a of the second seat 44. When the support unit 40 is in the second form F2, the third seat 52 is located higher than the upper surface 42a of the first seat 42. Angle θ4 is larger than angle θ3. Consequently, when the support unit 40 is in the first form F1, the second seat 44 is conveniently prevented from interfering with the fourth seat 54. When the support unit 40 is in the second form F2, the first seat 42 is conveniently prevented from interfering with the third seat 52.

In the straddled vehicle described above, the meter 31 has an upper surface 31a. The tilt of the upper surface 31a of the meter 31 when the support unit 40 is in the second form F2 is nearer to horizontal than the tilt of the upper surface 31a of the meter 31 when the support unit 40 is in the first form F1. The support unit 40 can therefore conveniently make the tilt of the meter 31 when the support unit 40 is in the second form F2 different from the tilt of the meter 31 when the support unit 40 is in the first form F1.

In the straddled vehicle described above, the steering device 11 includes a right front suspension 14R. a left front suspension 14L, and a top bridge 12. The top bridge 12 connects the right front suspension 14R and left front suspension 14L. The meter 31 is located more forward than the top bridge 12. When the support unit 40 is in the second form F2, the upper surface 31a of the meter 31 is substantially parallel to an upper surface 12a of the top bridge 12 in the side view of the vehicle. When the support unit 40 is in the second form F2, therefore, a sense of unity of the meter 31 and top bridge 12 can be improved in appearance.

When the support unit 40 is in the second form F2, the upper surface 31a of the meter 31 is located substantially on an extension E of the upper surface 12a in the side view of the vehicle. When the support unit 40 is in the second form F2, therefore, a sense of unity of the meter 31 and top bridge 12 can be further improved in appearance.

The straddled vehicle 1 includes a fuel tank 23. The fuel tank 23 is located behind the steering device 11 in the side view of the vehicle. When the support unit 40 is in the second form F2, the whole of meter 31 is located lower than the upper end Tf of the fuel tank 23 in the side view of the vehicle. When the support unit 40 is in the second form F2, therefore, a silhouette may be formed with continuity from the fuel tank 23 to the meter 31.

When the support unit 40 is in the first form F1, at least part of the meter 31 is located higher than the upper end Tf of the fuel tank 23 in the side view of the vehicle. So, the support unit 40 can make the position of the meter 31 when the support unit 40 is in the first form F1 higher than the position of the meter 31 when the support unit 40 is in the second form F2.

The straddled vehicle 1 includes a headlight 33. The headlight 33 is located lower and more forward than the meter 31. When the support unit 40 is in the first form F1, the meter 31 and headlight 33 overlap each other in a front view of the vehicle. When the support unit 40 is in the second form F2, the meter 31 and headlight 33 overlap each other in the front view of the vehicle. Length K2 is shorter than length K1. Here, length K1 is a total length in the up-down direction Z of the meter 31 and headlight 33 when the support unit 40 is in the first form F1. Length K2 is a total length in the up-down direction Z of the meter 31 and headlight 33 when the support unit 40 is in the second form F2. When the support unit 40 is in the second form F2, therefore, a sense of unity of the meter 31 and headlight 33 can be improved in appearance.

The foregoing embodiment may be modified as follows:

In the foregoing embodiment, the part of the second stay 51 is the third seat 52 that makes surface contact with the first seat 42 when the support unit 40 is in the first form F1. The part of the second stay 51 is the fourth seat 54 that makes surface contact with the second seat 44 when the support unit 40 is in the second form F2. Thus, the part of the second stay 51 that makes surface contact with the first seat 42 when the support unit 40 is in the first form F1 is different from the part of the second stay 51 that makes surface contact with the second seat 44 when the support unit 40 is in the second form F2. Alternatively, the part of the second stay 51 that makes surface contact with the first seat 42 when the support unit 40 is in the first form F1 may be the same as the part of the second stay 51 that makes surface contact with the second seat 44 when the support unit 40 is in the second form F2.

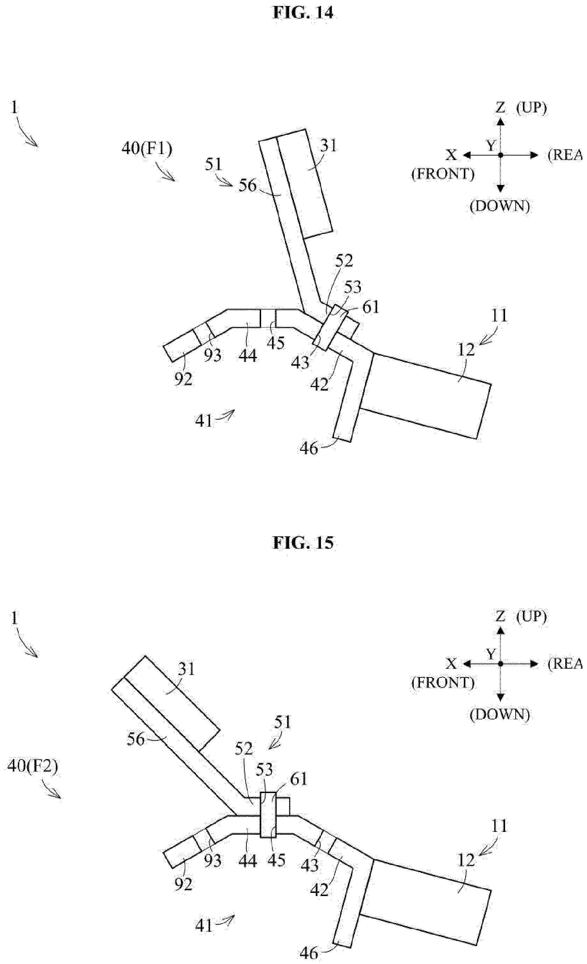

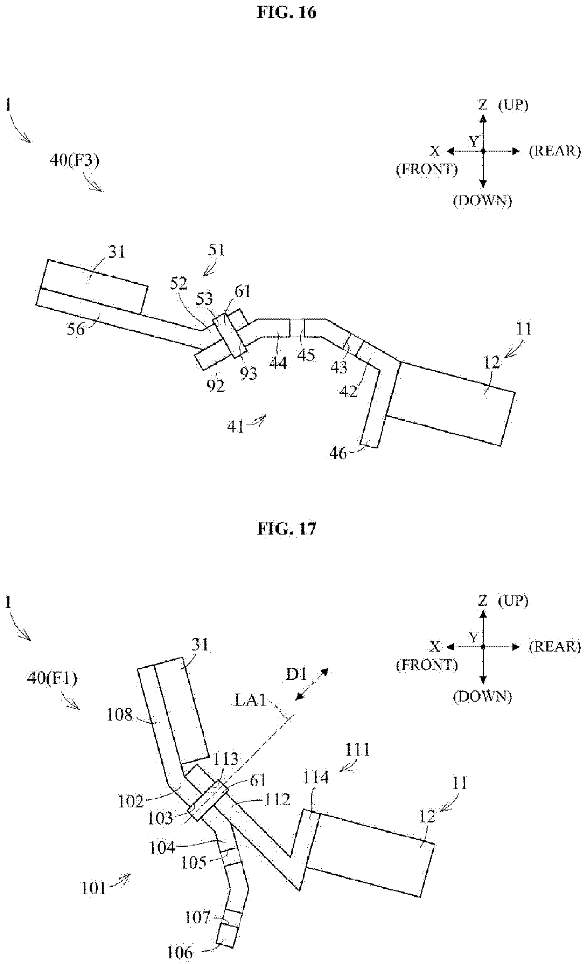

Figs. 14, 15, and 16 are views showing a support unit 40 in a modified embodiment. Figs. 14 to 16 show the support unit 40 schematically. Components identical to those of the embodiment are shown with the same signs, and will not particularly be described. The form of the support unit 40 shown in Fig. 14 will be called the first form F1. The form of the support unit 40 shown in Fig. 15 will be called the second form F2. The form of the support unit 40 shown in Fig. 16 will be called the third form F3. The support unit 40 is convertible between the first form F1, second form F2, and third form F3. The support unit 40 is convertible to the first form F1, second form F2, and third form F3. The tilt of the meter 31 when the support unit 40 is in the first form F1 is different from the tilt of the meter 31 when the support unit 40 is in the second form F2. The tilt of the meter 31 when the support unit 40 is in the first form F1 is different from the tilt of the meter 31 when the support unit 40 is in the third form F3. The tilt of the meter 31 when the support unit 40 is in the second form F2 is different from the tilt of the meter 31 when the support unit 40 is in the third form F3.

When the support unit 40 is in the third form F3, the first stay 41 is fixed to the steering device 11. Specifically, when the support unit 40 is in the third form F3, the base portion 46 is connected to the steering device 11.

The support unit 40 is constructed convertible between the first form F1 and second form F2 in the state of the first stay 41 being attached to the steering device 11.

The support unit 40 is constructed convertible between the first form F1, second form F2, and third form F3 in the state of the first stay 41 being attached to the steering device 11.

When the support unit 40 is in the third form F3, the second stay 51 is fixed to the meter 31. Specifically, when the support unit 40 is in the third form F3, the base portion 56 is connected to the meter 31.

The first stay 41 has a fifth seat 92 in addition to the first seat 42 and second seat 44. The first seat 42 and fifth seat 92 are not formed on the same plane. The first seat 42 and fifth seat 92 are formed on different planes. The second seat 44 and fifth seat 92 are not formed on the same plane. The second seat 44 and fifth seat 92 are formed on different planes.

Specifically, the plane on which the fifth seat 92 is formed is different from the plane on which the first seat 42 is formed. That is, the plane on which the fifth seat 92 is formed is different from the first plane P1. The plane on which the fifth seat 92 is formed is not parallel to the first plane P1. The plane on which the fifth seat 92 is formed is different from the plane on which the second seat 44 is formed. That is, the plane on which the fifth seat 92 is formed is different from the second plane P2. The plane on which the fifth seat 92 is formed is not parallel to the second plane P2.

The plane on which the fifth seat 92 is formed is parallel to the transverse direction Y.

The first stay 41 has fifth bores 93 in addition to the first bores 43 and second bores 45. The fifth bores 93 are formed in the fifth seat 92. The fifth bores 93 and first bores 43 are separated from each other by the fifth seat 92 and first seat 42. The fifth bores 93 and second bores 45 are separated from each other by the fifth seat 92 and second seat 44.

Reference is made to Fig. 14. When the support unit 40 is in the first form F1, the plane on which the first seat 42 is formed is parallel to the transverse direction Y. When the support unit 40 is in the first form F1, the plane on which the third seat 52 is formed is parallel to the plane on which the first seat 42 is formed. When the support unit 40 is in the first form F1, the first seat 42 makes surface contact with the third seat 52. Consequently, when the support unit 40 is in the first form F1, the first seat 42 can conveniently make surface contact with the second stay 51.

When the support unit 40 is in the first form F1, the joining unit 61 fastens the third seat 52 to the first seat 42. Specifically, the joining unit 61 is inserted in the first bores 43 and third bores 53. When the support unit 40 is in the first form F1, therefore, the joining unit 61 can conveniently join the first seat 42 and second stay 51.

Reference is made to Fig. 15. When the support unit 40 is in the second form F2, the plane on which the second seat 44 is formed is parallel to the transverse direction Y. When the support unit 40 is in the second form F2, the plane on which the third seat 52 is formed is parallel to the plane on which the second seat 44 is formed. When the support unit 40 is in the second form F2, the second seat 44 makes surface contact with the third seat 52. When the support unit 40 is in the second form F2, therefore, the second seat 44 can conveniently make surface contact with the second stay 51.

When the support unit 40 is in the second form F2, the joining unit 61 fastens the third seat 52 to the second seat 44. Specifically, when the support unit 40 is in the second form F2, the joining unit 61 is inserted in the second bores 45 and third bores 53. When the support unit 40 is in the second form F2, therefore, the joining unit 61 can conveniently join the second seat 44 and second stay 51.

Reference is made to Fig. 16. When the support unit 40 is in the third form F3, the plane on which the fifth seat 92 is formed is parallel to the transverse direction Y. When the support unit 40 is in the third form F3, the plane on which the third seat 52 is formed is parallel to the plane on which the fifth seat 92 is formed. When the support unit 40 is in the third form F3, the fifth seat 92 is in surface contact with the third seat 52. Therefore, when the support unit 40 is the third form F3, the fifth seat 92 can conveniently make surface contact with the second stay 51.

When the support unit 40 is in the third form F3, the joining unit 61 fastens the third seat 52 to the fifth seat 92. Specifically, when the support unit 40 is in the third form F3, the joining unit 61 is inserted in the fifth bores 93 and third bores 53. When the support unit 40 is in the third form F3, therefore, the joining unit 61 can conveniently join the fifth seat 92 and second stay 51.

As described above, this modified embodiment can change the tilt of the meter 31 with a simple construction. This modified embodiment can omit the fourth seat 54. Therefore, the construction of the second stay 51 can be further simplified.

The first stay 41 is fixed to the steering device 11. The steering device 11 can therefore conveniently support the support unit 40.

When the support unit 40 is in the first form F1, the first stay 41 is fixed to the steering device 11. When the support unit 40 is in the first form F1, therefore, the support unit 40 is conveniently supported by the steering device 11.

When the support unit 40 is in the second form F2, the first stay 41 is fixed to the steering device 11. When the support unit 40 is in the second form F2, therefore, the support unit 40 is conveniently supported by the steering device 11.

When the support unit 40 is in the third form F3, the first stay 41 is fixed to the steering device 11. When the support unit 40 is in the third form F3, therefore, the support unit 40 is conveniently supported by the steering device 11.

The first stay 41 is constantly attached to the steering device 11. The steering device 11 can therefore conveniently support the support unit 40.

The support unit 40 is configured to convert between the first form F1 and second form F2 in the state of the first stay 41 being attached to the steering device 11. It is therefore easy to convert the support unit 40 from the first form F1 to the second form F2. It is also easy to convert the support unit 40 from the second form F2 to the first form F1.

The support unit 40 is configured convertible between the first form F1, second form F2, and third form F3 in the state of the first stay 41 being attached to the steering device 11. It is therefore easy to convert the support unit 40 to the first form F1. It is also easy to convert the support unit 40 to the second form F2. It is also easy to convert the support unit 40 to the third form F3.

The second stay 51 is fixed to the meter 31. The support unit 40 can therefore conveniently support the meter 31.

When the support unit 40 is in the first form F1, the second stay 51 is fixed to the meter 31. When the support unit 40 is in the first form F1, therefore, the support unit 40 conveniently supports the meter 31.

When the support unit 40 is in the second form F2, the second stay 51 is fixed to the meter 31. When the support unit 40 is in the second form F2, therefore, the support unit 40 conveniently supports the meter 31.

When the support unit 40 is in the third form F3, the second stay 51 is fixed to the meter 31. When the support unit 40 is in the third form F3, therefore, the support unit 40 conveniently supports the meter 31.

In the foregoing embodiment, the first stay 41 is fixed to the steering device 11. The first stay 41 is constantly attached to the steering device 11. The second stay 51 is fixed to the meter 31. Alternatively, the first stay 41 may be fixed to the meter 31. The second stay 51 may be fixed to the steering device 11. The second stay 51 may constantly be attached to the steering device 11.

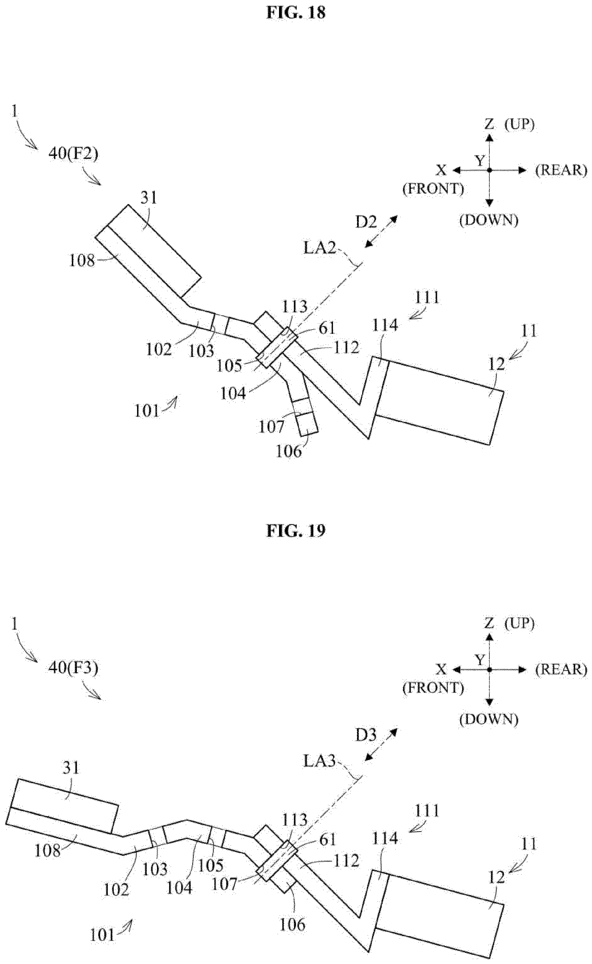

Figs. 17, 18, and 19 are views showing a support unit 40 in a modified embodiment. Figs. 17 to 19 show the support unit 40 schematically. Components identical to those of the embodiment are shown with the same signs, and will not particularly be described. The form of the support unit 40 shown in Fig. 17 will be called the first form F1. The form of the support unit 40 shown in Fig. 18 will be called the second form F2. The form of the support unit 40 shown in Fig. 19 will be called the third form F3. The support unit 40 is convertible between the first form F1, second form F2, and third form F3. The support unit 40 is convertible to the first form F1, second form F2, and third form F3. The tilt of the meter 31 when the support unit 40 is in the first form F1 is different from the tilt of the meter 31 when the support unit 40 is in the second form F2. The tilt of the meter 31 when the support unit 40 is in the first form F1 is different from the tilt of the meter 31 when the support unit 40 is in the third form F3. The tilt of the meter 31 when the support unit 40 is in the second form F2 is different from the tilt of the meter 31 when the support unit 40 is in the third form F3.

The support unit 40 has a first stay 101 and a second stay 111. The first stay 101 is fixed to the meter 31. The first stay 101 is constantly attached to the meter 31. Whenever the support unit 40 is in any one of the first to third forms F1-F3, the first stay 101 is attached to the meter 31. The second stay 111 is fixed to the steering device 11. The second stay 111 is constantly attached to the steering device 11. Whenever the support unit 40 is in any one of the first to third forms F1-F3, the second stay 111 is attached to the steering device 11. The joining unit 61 joins the first stay 101 and second stay 111.

Specifically, when the support unit 40 is in the first form F1, the first stay 101 is fixed to the meter 31. When the support unit 40 is in the second form F2, the first stay 101 is fixed to the meter 31. When the support unit 40 is in the third form F3, the first stay 101 is fixed to the meter 31.

When the support unit 40 is in the first form F1, the second stay 111 is fixed to the steering device 11. When the support unit 40 is in the second form F2, the second stay 111 is fixed to the steering device 11. When the support unit 40 is in the third form F3, the second stay 111 is fixed to the steering device 11.

The support unit 40 is constructed to convert between the first form F1 and second form F2 in the state of the second stay 111 being attached to the steering device 11.

The support unit 40 is constructed convertible between the first form F1, second form F2, and third form F3 in the state of the second stay 111 being attached to the steering device 11.

The first stay 101 has a first seat 102, a second seat 104, and a fifth seat 106. The first seat 102 and second seat 104 are not formed on the same plane. The first seat 102 and second seat 104 are formed on different planes. The first seat 102 and fifth seat 106 are not formed on the same plane. The first seat 102 and fifth seat 106 are formed on different planes. The second seat 104 and fifth seat 106 are not formed on the same plane. The second seat 104 and fifth seat 106 are formed on different planes.

Specifically, the plane on which the first seat 102 is formed is different from the plane on which the second seat 104 is formed. In other words, the first seat 102 is formed on a first plane. The second seat 104 is formed on a second plane. The second plane is different from the first plane. The first plane is not parallel to the second plane.

Similarly, the plane on which the first seat 102 is formed is different from a plane on which the fifth seat 106 is formed. The plane on which the second seat 104 is formed is different from the plane on which the fifth seat 106 is formed.

The plane on which the first seat 102 is formed is parallel to the transverse direction Y. The plane on which the second seat 104 is formed is parallel to the transverse direction Y. The plane on which the fifth seat 106 is formed is parallel to the transverse direction Y.

The first stay 41 has first bores 103, second bores 105, and fifth bores 107. The first bores 103 are formed in the first seat 102. The second bores 105 are formed in the second seat 104. The fifth bores 107 are formed in the fifth seat 106.

The first bores 103 and second bores 105 are separated from each other by the first seat 102 and second seat 104. The first bores 103 and fifth bores 107 are separated from each other by the first seat 102 and fifth seat 106. The second bores 105 and fifth bores 107 and are separated from each other by the second seat 104 and fifth seat 106.

The first stay 101 further includes a base portion 108. The base portion 108 is connected to the meter 31.

The second stay 111 has a third seat 112. The third seat 112 is parallel to the transverse direction Y. The plane on which the third seat 112 is formed is parallel to the transverse direction Y.

The second stay 111 has third bores 113. The third bores 113 are formed in the third seat 112.

The second stay 111 further includes a base portion 114. The base portion 114 is connected to the steering device 11. For example, the base portion 114 is connected to the top bridge 12.

Reference is made to Fig. 17. When the support unit 40 is in the first form F1, the plane on which the first seat 102 is formed is parallel to the transverse direction Y. When the support unit 40 is in the first form F1, the plane on which the first seat 102 is formed is parallel to the plane on which the third seat 112 is formed. When the support unit 40 is in the first form F1, the first seat 102 makes surface contact with the third seat 112. Consequently, when the support unit 40 is in the first form F1, the first seat 102 can conveniently make surface contact with the second stay 111.

When the support unit 40 is in the first form F1, the joining unit 61 fastens the third seat 112 to the first seat 102. Specifically, the joining unit 61 is inserted in the first bores 103 and third bores 113. When the support unit 40 is in the first form F1, therefore, the joining unit 61 can conveniently join the first seat 102 and second stay 111.

Reference is made to Fig. 18. When the support unit 40 is in the second form F2, the plane on which the second seat 104 is formed is parallel to the transverse direction Y. When the support unit 40 is in the second form F2, the plane on which the second seat 104 is formed is parallel to the plane on which the third seat 112 is formed. When the support unit 40 is in the second form F2, the second seat 104 makes surface contact with the third seat 112. When the support unit 40 is in the second form F2, therefore, the second seat 104 can conveniently make surface contact with the second stay 111.

When the support unit 40 is in the second form F2, the joining unit 61 fastens the third seat 112 to the second seat 104. Specifically, when the support unit 40 is in the second form F2, the joining unit 61 is inserted in the second bores 105 and third bores 113. When the support unit 40 is in the second form F2, therefore, the joining unit 61 can conveniently join the second seat 104 and second stay 111.

Reference is made to Fig. 19. When the support unit 40 is in the third form F3, the plane on which the fifth seat 106 is formed is parallel to the transverse direction Y. When the support unit 40 is in the third form F3, the plane on which the fifth seat 106 is formed is parallel to the plane on which the third seat 112 is formed. When the support unit 40 is in the third form F3, the fifth seat 106 is in surface contact with the third seat 112. Therefore, when the support unit 40 is the third form F3, the fifth seat 106 can conveniently make surface contact with the second stay 111.

When the support unit 40 is in the third form F3, the joining unit 61 fastens the third seat 112 to the fifth seat 106. Specifically, when the support unit 40 is in the third form F3, the joining unit 61 is inserted in the fifth bores 107 and third bores 113. When the support unit 40 is in the third form F3, therefore, the joining unit 61 can conveniently join the fifth seat 106 and second stay 111.

As described above, this modified embodiment can change the tilt of the meter 31 with a simple construction.

The second stay 111 is fixed to the steering device 11. The second stay 111 is constantly attached to the steering device 11. The steering device 11 can therefore conveniently support the support unit 40.

When the support unit 40 is in the first form F1, the second stay 111 is fixed to the steering device 11. When the support unit 40 is in the first form F1, therefore, the second stay 111 is conveniently supported by the steering device 11.

When the support unit 40 is in the second form F2, the second stay 111 is fixed to the steering device 11. When the support unit 40 is in the second form F2, therefore, the second stay 111 is conveniently supported by the steering device 11.

When the support unit 40 is in the third form F3, the second stay 111 is fixed to the steering device 11. When the support unit 40 is in the third form F3, therefore, the second stay 111 is conveniently supported by the steering device 11.

The support unit 40 is configured to convert between the first form F1 and second form F2 in the state of the second stay 111 being attached to the steering device 11. It is therefore easy to convert the support unit 40 from the first form F1 to the second form F2. It is also easy to convert the support unit 40 from the second form F2 to the first form F1.

The support unit 40 is configured convertible between the first form F1, second form F2, and third form F3 in the state of the second stay 111 being attached to the steering device 11. It is therefore easy to convert the support unit 40 to the first form F1. It is also easy to convert the support unit 40 to the second form F2. It is also easy to convert the support unit 40 to the third form F3.

The first stay 101 is fixed to the meter 31. The first stay 101 is constantly attached to the meter 31. The support unit 40 can therefore conveniently support the meter 31.

When the support unit 40 is in the first form F1, the first stay 101 is fixed to the meter 31. When the support unit 40 is in the first form F1, therefore, the support unit 40 conveniently supports the meter 31.

When the support unit 40 is in the second form F2, the first stay 101 is fixed to the meter 31. When the support unit 40 is in the second form F2, therefore, the support unit 40 conveniently supports the meter 31.

When the support unit 40 is in the third form F3, the first stay 101 is fixed to the meter 31. When the support unit 40 is in the third form F3, therefore, the support unit 40 conveniently supports the meter 31.

The second stay 111 does not include an element corresponding to the fourth seat 54 of the embodiment. Consequently, the construction of the second stay 111 can be further simplified.

The number of forms to which the support unit 40 is convertible is two in the foregoing embodiment. Alternatively, for example, the number of forms to which the support unit 40 is convertible may be more than two. For example, the number of forms to which the support unit 40 is convertible may be three as in the modified embodiment shown in Figs. 14 to 16. For example, the number of forms to which the support unit 40 is convertible may be three as in the modified embodiment shown in Figs. 17 to 19.

In the foregoing embodiment, when the support unit 40 switches between the first form F1 and second form F2, the extending direction of the first shank 64A is changed. Specifically, the second direction D2 is different from the first direction D1. The second direction D2 is not parallel to the first direction D1. Alternatively, for example, when the support unit 40 switches between the first form F1 and second form F2, the extending direction of the first shank 64A does not need to change. Specifically, the second direction D2 may be the same as the first direction D1. The second direction D2 may be parallel to the first direction D1.

For expediency, reference is made to Figs. 17 to 19. Fig. 17 shows axis LA1 of the first shank 64A. Fig. 18 shows axis LA2 of the first shank 64A. Fig. 19 shows axis LA3 of the first shank 64A. Figs. 17 to 19 omit illustration of the first shank 64A itself. The direction of axis LA1 will be called the first direction D1. The direction of axis LA2 will be called the second direction D2. The direction of axis LA3 will be called the third direction D3.

When the support unit 40 is in the first form F1, the first shank 64A extends in the first direction D1. When the support unit 40 is in the second form F2, the first shank 64A extends in the second direction D2. When the support unit 40 is in the third form F3, the first shank 64A extends in the third direction D3. The second direction D2 is the same as the first direction D1. The second direction D2 is parallel to the first direction D1. The third direction D3 is also the same as the first direction D1. The third direction D3 is also parallel to the first direction D1.

In the foregoing embodiment, the support unit 40 is connected to the top bridge 12. Alternatively, the support unit 40 may be connected to the elements other than the top bridge 12 of the steering device 11. For example, the support unit 40 may be connected to at least one of the top bridge 12, bottom bridge 13, front suspension 14, handlebar 16, and handlebar holder 17.

In the foregoing embodiment, the second seat 44 is divided into the right second seat 44R and left second seat 44L. Alternatively, the shape of the second seat 44 may be changed as appropriate. The second seat 44 does not need to be divided into the right second seat 44R and left second seat 44L. Similarly, the shapes of the elements other than the second seat 44 of the support unit 40 may be changed as appropriate.

In the foregoing embodiment, the joining unit 61 has the first joining unit 61A and second joining unit 61B. Alternatively, for example, any one of the first joining unit 61A and second joining unit 61B may be omitted. Or the joining unit 61 may have a third joining unit in addition to the first joining unit 61A and second joining unit 61B.

In the foregoing embodiment, the first bores 43 include the right first bore 43R and left first bore 43L. Alternatively, for example, any one of the right first bore 43R and the left first bore 43L may be omitted. Or the first bores 43 may include an additional first bore besides the right first bore 43R and left first bore 43L. A similar change may be made to the second bores 45, third bores 53, and fourth bores 55.

In the foregoing embodiment, when the support unit 40 is in the second form F2, the whole of the meter 31 is located lower than the upper end Tf of the fuel tank 23 in the side view of the vehicle. Alternatively, when the support unit 40 is in the second form F2, part of the meter 31 may be located higher than the upper end Tf of the fuel tank 23 in the side view of the vehicle.

In the foregoing embodiment, the whole of handlebar 16 is located higher than the top bridge 12, for example. Alternatively, at least part of the handlebar 16 may be located lower than the top bridge 12.

In the foregoing embodiment, the handlebar holder 17 is supported by the top bridge 12. Alternatively, the handlebar holder 17 may be supported by the front suspension 14.

In the foregoing embodiment, the straddled vehicle 1 is classified as a street type vehicle. Alternatively, the straddled vehicle 1 may be changed to vehicles of other types, such as the sport type or a vehicle for irregular grounds (ALL-TERRAIN VEHICLE).

In the foregoing embodiment, the number of front wheels 21 of the straddled vehicle 1 is one. Alternatively, the number of front wheels 21 of the straddled vehicle 1 may be two. In the foregoing embodiment, the number of rear wheels 28 of the straddled vehicle 1 is one. Alternatively, the number of rear wheels 28 of the straddled vehicle 1 may be two.

In the foregoing embodiment, the straddled vehicle 1 has the engine (internal combustion engine) 22 as power source. Alternatively, for example, the straddled vehicle 1 may have an electric motor in addition to the engine 22 as power source. For example, the straddled vehicle 1 may have an electric motor as power source instead of the engine 22.

## Claims

1. A straddled vehicle (1) comprising:
a steering device (11);
a support unit (40) supported by the steering device (11) to be convertible between a first form (F1) and a second form (F2); and
a meter (31) supported by the support unit (40);
wherein the support unit (40) includes:
a first stay (41, 101) fixed to one of the steering device (11) and the meter (31);
a second stay (51, 111) fixed to the other of the steering device (11) and the meter (31), and attachable to and detachable from the first stay (41, 101); and
a joining unit (61) for joining the first stay (41, 101) and the second stay (51, 111);
the first stay (41, 101) includes:
a first seat (42, 102) formed on a first plane (P1); and
a second seat (44, 104) formed on a second plane (P2) different from the first plane (P1);
when the support unit (40) is in the first form (F1), the first seat (42, 102) makes surface contact with the second stay (51, 111), and the joining unit (61) fastens the first seat (42, 102) and the second stay (51, 111);
when the support unit (40) is in the second form (F2), the second seat (44, 104) makes surface contact with the second stay (51, 111), and the joining unit (61) fastens the second seat (44, 104) and the second stay (51, 111); and
a tilt of the meter (31) when the support unit (40) is in the second form (F2) is different from a tilt of the meter (31) when the support unit (40) is in the first form (F1).

2. The straddled vehicle (1) according to claim 1, wherein:
when the support unit (40) is in the first form (F1), the first plane (P1) is parallel to a transverse direction (Y) of the straddled vehicle (1); and
when the support unit (40) is in the second form (F2), the second plane (P2) is parallel to the transverse direction (Y) of the straddled vehicle (1).

3. The straddled vehicle (1) according to claim 1 or 2, wherein the joining unit (61) includes:
a first shank (64A) that penetrates the first stay (41, 101) and the second stay (51, 111); and
a second shank (64B) that penetrates the first stay (41, 101) and the second stay (51, 111);
when the support unit (40) is in the first form (F1), the first shank (64A) and the second shank (64B) are arranged in the transverse direction (Y) of the straddled vehicle (1), and the first shank (64A) and the second shank (64B) extend in a first direction (D1) perpendicular to the transverse direction (Y) of the straddled vehicle (1) respectively; and
when the support unit (40) is in the second form (F2), the first shank (64A) and the second shank (64B) are arranged in the transverse direction (Y) of the straddled vehicle (1), and the first shank (64A) and the second shank (64B) extend in a second direction (D2) perpendicular to the transverse direction (Y) of the straddled vehicle (1) respectively.

4. The straddled vehicle (1) according to claim 3, wherein, when the first shank (64A) and the second shank (64B) are removed from the first stay (41, 101) and the second stay (51, 111) respectively, the joining of the first stay (41, 101) and the second stay (51, 111) is cancelled, permitting the second stay (51, 111) free movement relative to the first stay (41, 101).

5. The straddled vehicle (1) according to any one of claims 1 to 4, wherein the first stay (41, 101) includes:
first bores (43, 103) formed in the first seat (42, 102); and
second bores (45, 105) formed in the second seat (44, 104);
when the support unit (40) is in the first form (F1), the joining unit (61) is inserted in the first bores (43, 103);
when the support unit (40) is in the second form (F2), the joining unit (61) is inserted in the second bores (45, 105); and
the first bores (43, 103) and the second bores (45, 105) are separated from each other by the first seat (42, 102) and the second seat (44, 104).

6. The straddled vehicle (1) according to any one of claims 1 to 5, wherein the second stay (51, 111) includes a third seat (52, 112);
when the support unit (40) is in the first form (F1), the first seat (42, 102) makes surface contact with the third seat (52, 112), and the joining unit (61) joins the third seat (52, 112) to the first seat (42, 102); and
when the support unit (40) is in the second form (F2), the second seat (44, 104) makes surface contact with the third seat (52, 112), and the joining unit (61) joins the third seat (52, 112) to the second seat (44, 104).

7. The straddled vehicle (1) according to claim 6, wherein:
the first stay (41, 101) is constantly attached to the steering device (11); and
the second stay (51, 111) is fixed to the meter (31).

8. The straddled vehicle (1) according to claim 6, wherein:
the first stay (41, 101) is fixed to the meter (31); and
the second stay (51, 111) is constantly attached to the steering device (11).

9. The straddled vehicle (1) according to any one of claims 1 to 5, wherein the second stay (51, 111) includes:
a third seat (52, 112); and
a fourth seat (54);
when the support unit (40) is in the first form (F1), the first seat (42, 102) makes surface contact with the third seat (52, 112), and the joining unit (61) joins the third seat (52, 112) to the first seat (42, 102); and
when the support unit (40) is in the second form (F2), the second seat (44, 104) makes surface contact with the fourth seat (54), and the joining unit (61) joins the fourth seat (54) to the second seat (44, 104).

10. The straddled vehicle (1) according to claim 9, wherein:
the first stay (41, 101) is fixed to the steering device (11); and
the second stay (51, 111) is fixed to the meter (31).

11. The straddled vehicle (1) according to claim 9 or 10, wherein:
the second seat (44, 104) is in contact with the first seat (42, 102);
the fourth seat (54) is in contact with the third seat (52, 112); and
a first angle (θ3) formed between the first seat (42, 102) and the second seat (44, 104) is different from a second angle (θ4) formed between the third seat (52, 112) and the fourth seat (54).

12. The straddled vehicle (1) according to claim 11, wherein:
the first seat (42, 102) extends forward in longitudinal direction (X) of the straddled vehicle;
the second seat (44, 104) extends downward from the first seat (42, 102) in up-down direction (Z) of the straddled vehicle;
when the support unit (40) is in the first form (F1), the third seat (52, 112) contacts an upper surface (42a) of the first seat (42, 102) in up-down direction (Z) of the straddled vehicle, and the fourth seat (54) is located more forward than a front surface (44a) of the second seat (44, 104) in longitudinal direction (X) of the straddled vehicle;
when the support unit (40) is in the second form (F2), the fourth seat (54) contacts the front surface (44a) of the second seat (44,104) in longitudinal direction (X) of the straddled vehicle, and the third seat (52, 112) is located higher than the upper surface (42a) of the first seat (42, 102) in up-down direction (Z) of the straddled vehicle; and
the second angle (θ4) is larger than the first angle (θ3).

13. The straddled vehicle (1) according to any one of claims 1 to 12, wherein:
the meter (31) has an upper surface (31a) in up-down direction (Z) of the straddled vehicle;
a tilt of the upper surface (31a) of the meter (31) when the support unit (40) is in the second form (F2) is nearer to horizontal than a tilt of the upper surface (31a) of the meter (31) when the support unit (40) is in the first form (F1).

14. The straddled vehicle (1) according to claim 13, wherein the steering device (11) includes:
a right front suspension (14R);
a left front suspension (14L); and
a top bridge (12) connecting the right front suspension (14R) and the left front suspension (14L);
the meter (31) is located more forward than the top bridge (12) in longitudinal direction (X) of the straddled vehicle;
when the support unit (40) is in the second form (F2), the upper surface (31a) of the meter (31) is substantially parallel to an upper surface (12a) of the top bridge (12) in a side view of the straddled vehicle (1).

15. The straddled vehicle (1) according to claim 14, wherein, when the support unit (40) is in the second form (F2), the upper surface (31a) of the meter (31) is located substantially on an extension (E) of the upper surface (12a) of the top bridge (12) in the side view of the straddled vehicle (1).

16. The straddled vehicle (1) according to any one of claims 1 to 15, comprising a fuel tank (23) located behind the steering device (11) in longitudinal direction (X) of the straddled vehicle and in a side view of the straddled vehicle (1);
wherein, when the support unit (40) is in the first form (F1), at least part of the meter (31) is located higher than an upper end (Tf) of the fuel tank (23) in up-down direction (Z) of the straddled vehicle and in the side view of the straddled vehicle (1); and when the support unit (40) is in the second form (F2), a whole of the meter (31) is located lower than the upper end (Tf) of the fuel tank (23) in up-down direction (Z) of the straddled vehicle and in the side view of the straddled vehicle (1).

17. The straddled vehicle (1) according to any one of claims 1 to 16, comprising a headlight (33) located lower in up-down direction (Z) of the straddled vehicle and more forward in longitudinal direction (X) of the straddled vehicle than the meter (31); wherein, when the support unit (40) is in the first form (F1), the meter (31) and the headlight (33) overlap each other in a front view of the straddled vehicle (1);
when the support unit (40) is in the second form (F2), the meter (31) and the headlight (33) overlap each other in the front view of the straddled vehicle (1);
a total length (K2) of the meter (31) and the headlight (33) in up-down direction (Z) of the straddled vehicle (1) when the support unit (40) is in the second form (F2) is shorter than a total length (K1) of the meter (31) and the headlight (33) in up-down direction (Z) of the straddled vehicle (1) when the support unit (40) is in the first form (F1).

## Patentansprüche

1. Ein Spreiz-Sitz-Fahrzeug (1), das umfasst:
eine Lenkvorrichtung (11);
eine Trägereinheit (40), die durch die Lenkvorrichtung (11), die zwischen einer ersten Form (F1) und einer zweiten Form (F2) konvertierbar ist, gelagert ist; und
eine Messgerät (31), das durch die Trägereinheit (40) gelagert ist;
wobei die Trägereinheit (40) enthält:
eine erste Strebe (41, 101), die an einem von der Lenkvorrichtung (11) und dem Messgerät (31) befestigt ist;
eine zweite Strebe (51, 111), die an dem jeweils Anderen von der Lenkvorrichtung (11) und des Messgeräts (31) befestigt ist, und an der ersten Strebe (41, 101) anbringbar und von dieser lösbar ist; und
eine Verbindungseinheit (61) zum Verbinden der ersten Strebe (41, 101) und der zweiten Strebe (51, 111);
die erste Strebe (41, 101) enthält:
einen ersten Sitz (42, 102), der in einer ersten Ebene (P1) ausgebildet ist; und
einen zweiten Sitz (44, 104), der in einer zweiten Ebene (P2) ausgebildet ist, die sich von der ersten Ebene (P1) unterscheidet;
wenn die Trägereinheit (40) in der ersten Form (F1) ist, stellt der erste Sitz (42, 102) Oberflächenkontakt mit der zweiten Strebe (51, 111) her, und die Verbindungseinheit (61) befestigt den ersten Sitz (42, 102) und die zweite Strebe (51, 111);
wenn die Trägereinheit (40) in der zweiten Form (F2) ist, stellt der zweite Sitz (44, 104) Oberflächenkontakt mit der zweiten Strebe (51, 111) her, und die Verbindungseinheit (61) befestigt den zweiten Sitz (44, 104) und die zweite Strebe (51, 111); und
eine Neigung des Messgeräts (31), wenn die Trägereinheit (40) in der zweiten Form (F2) ist, unterscheidet sich von einer Neigung des Messgeräts (31), wenn die Trägereinheit (40) in der ersten Form (F1) ist.

2. Das Spreiz-Sitz-Fahrzeug (1) gemäß Anspruch 1, wobei:
wenn die Trägereinheit (40) in der ersten Form (F1) ist, ist die erste Ebene (P1) parallel zu einer Querrichtung (Y) des Spreiz-Sitz-Fahrzeugs (1); und
wenn die Trägereinheit (40) in der zweiten Form (F2) ist, ist die zweite Ebene (P2) parallel zur Querrichtung (Y) des Spreiz-Sitz-Fahrzeugs (1).

3. Das Spreiz-Sitz-Fahrzeug (1) gemäß Anspruch 1 oder 2, wobei die Verbindungseinheit (61) enthält:
einen ersten Schaft (64A), der die erste Strebe (41, 101) und die zweite Strebe (51, 111) durchdringt; und
einen zweiten Schaft (64B), der die erste Strebe (41, 101) und die zweite Strebe (51, 111) durchdringt;
wenn die Trägereinheit (40) in der ersten Form (F1) ist, sind der erste Schaft (64A) und der zweite Schaft (64B) in der Querrichtung (Y) des Spreiz-Sitz-Fahrzeugs (1) angeordnet, und der erste Schaft (64A) und der zweite Schaft (64B) erstrecken sich jeweils in einer ersten Richtung (D1) senkrecht zu der Querrichtung (Y) des Spreiz-Sitz-Fahrzeugs (1); und
wenn die Trägereinheit (40) in der zweiten Form (F2) ist, sind der erste Schaft (64A) und der zweite Schaft (64B) in der Querrichtung (Y) des Spreiz-Sitz-Fahrzeugs (1) angeordnet, und der erste Schaft (64A) und der zweite Schaft (64B) erstrecken sich jeweils in einer zweiten Richtung (D2) senkrecht zu der Querrichtung (Y) des Spreiz-Sitz-Fahrzeugs (1).

4. Das Spreiz-Sitz-Fahrzeug (1) gemäß Anspruch 3, wobei, wenn der erste Schaft (64A) und der zweite Schaft (64B) jeweils von der ersten Strebe (41, 101) und der zweiten Strebe (51, 111) entfernt sind, die Verbindung der ersten Strebe (41, 101) und der zweiten Strebe (51, 111) aufgehoben ist, so dass sich die zweite Strebe (51, 111) relativ zu der ersten Strebe (41, 101) frei bewegen kann.

5. Das Spreiz-Sitz-Fahrzeug (1) gemäß irgendeinem der Ansprüche 1 bis 4, wobei die erste Strebe (41, 101) enthält:
erste Bohrungen (43, 103), die in dem ersten Sitz (42, 102) ausgebildet sind; und
zweite Bohrungen (45, 105), die in dem zweiten Sitz (44, 104) ausgebildet sind;
wenn die Trägereinheit (40) in der ersten Form (F1) ist, ist die Verbindungseinheit (61) in die ersten Bohrungen (43, 103) eingesetzt;
wenn die Trägereinheit (40) in der zweiten Form (F2) ist, ist die Verbindungseinheit (61) in die zweiten Bohrungen (45, 105) eingesetzt; und
die ersten Bohrungen (43, 103) und die zweiten Bohrungen (45, 105) sind durch den ersten Sitz (42, 102) und den zweiten Sitz (44, 104) voneinander getrennt.

6. Das Spreiz-Sitz-Fahrzeug (1) gemäß irgendeinem der Ansprüche 1 bis 5, wobei die zweite Strebe (51, 111) einen dritten Sitz (52, 112) enthält;
wenn die Trägereinheit (40) in der ersten Form (F1) ist, stellt der erste Sitz (42, 102) Oberflächenkontakt mit dem dritten Sitz (52, 112) her und die Verbindungseinheit (61) verbindet den dritten Sitz (52, 112) mit dem ersten Sitz (42, 102); und
wenn die Trägereinheit (40) in der zweiten Form (F2) ist, stellt der zweite Sitz (44, 104) Oberflächenkontakt mit dem dritten Sitz (52, 112) her und die Verbindungseinheit (61) verbindet den dritten Sitz (52, 112) mit dem zweiten Sitz (44, 104).

7. Das Spreiz-Sitz-Fahrzeug (1) gemäß Anspruch 6, wobei:
die erste Strebe (41, 101) ständig an der Lenkvorrichtung (11) befestigt ist; und
die zweite Strebe (51, 111) am Messgerät (31) befestigt ist.

8. Das Spreiz-Sitz-Fahrzeug (1) gemäß Anspruch 6, wobei:
die erste Strebe (41, 101) am Messgerät (31) befestigt ist; und
die zweite Strebe (51, 111) ständig an der Lenkvorrichtung (11) befestigt ist.

9. Das Spreiz-Sitz-Fahrzeug (1) gemäß irgendeinem der Ansprüche 1 bis 5, wobei die zweite Strebe (51, 111) enthält:
einen dritten Sitz (52, 112); und
einen vierten Sitz (54);
wenn die Trägereinheit (40) in der ersten Form (F1) ist, stellt der erste Sitz (42, 102) Oberflächenkontakt mit dem dritten Sitz (52, 112) her und die Verbindungseinheit (61) verbindet den dritten Sitz (52, 112) mit dem ersten Sitz (42, 102); und
wenn die Trägereinheit (40) in der zweiten Form (F2) ist, stellt der zweite Sitz (44, 104) Oberflächenkontakt mit dem vierten Sitz (54) her und die Verbindungseinheit (61) verbindet den vierten Sitz (54) mit dem zweiten Sitz (44, 104).

10. Das Spreiz-Sitz-Fahrzeug (1) gemäß Anspruch 9, wobei:
die erste Strebe (41, 101) an der Lenkvorrichtung (11) befestigt ist; und
die zweite Strebe (51, 111) am Messgerät (31) befestigt ist.

11. Das Spreiz-Sitz-Fahrzeug (1) gemäß Anspruch 9 oder 10, wobei:
der zweite Sitz (44, 104) in Kontakt mit dem ersten Sitz (42, 102) ist;
der vierte Sitz (54) in Kontakt mit dem dritten Sitz (52, 112) ist; und
ein erster Winkel (θ3), der zwischen dem ersten Sitz (42, 102) und dem zweiten Sitz (44, 104) gebildet wird, sich von einem zweiten Winkel (θ4) unterscheidet, der zwischen dem dritten Sitz (52, 112) und dem vierten Sitz (54) gebildet wird.

12. Das Spreiz-Sitz-Fahrzeug (1) gemäß Anspruch 11, wobei:
der erste Sitz (42, 102) sich in Längsrichtung (X) des Spreiz-Sitz-Fahrzeugs nach vorne erstreckt;
der zweite Sitz (44, 104) sich vom ersten Sitz (42, 102) in Aufwärts-Abwärts-Richtung (Z) des Spreiz-Sitz-Fahrzeugs nach unten erstreckt;
wenn die Trägereinheit (40) in der ersten Form (F1) ist, kontaktiert der dritte Sitz (52, 112) eine obere Fläche (42a) des ersten Sitzes (42, 102) in Aufwärts-Abwärts-Richtung (Z) des Spreiz-Sitz-Fahrzeugs, und der vierte Sitz (54) ist in Längsrichtung (X) des Spreiz-Sitz-Fahrzeugs weiter vorne angeordnet als eine vordere Fläche (44a) des zweiten Sitzes (44, 104);
wenn die Trägereinheit (40) in der zweiten Form (F2) ist, kontaktiert der vierte Sitz (54) die vordere Fläche (44a) des zweiten Sitzes (44, 104) in Längsrichtung (X) des Spreiz-Sitz-Fahrzeugs, und der dritte Sitz (52, 112) ist höher als die obere Fläche (42a) des ersten Sitzes (42, 102) in Aufwärts-Abwärts-Richtung (Z) des Spreiz-Sitz-Fahrzeugs angeordnet; und
der zweite Winkel (θ4) ist größer als der erste Winkel (θ3).

13. Das Spreiz-Sitz-Fahrzeug (1) gemäß irgendeinem der Ansprüche 1 bis 12, wobei:
das Messgerät (31) eine obere Fläche (31a) in Aufwärts-Abwärts-Richtung (Z) des Spreiz-Sitz-Fahrzeugs hat;
eine Neigung der oberen Fläche (31a) des Messgeräts (31), wenn die Trägereinheit (40) in der zweiten Form (F2) ist, ist näher an der Horizontalen ist als eine Neigung der oberen Fläche (31a) des Messgeräts (31), wenn die Trägereinheit (40) in der ersten Form (F1) ist.

14. Das Spreiz-Sitz-Fahrzeug (1) gemäß Anspruch 13, wobei die Lenkvorrichtung (11) enthält:
eine rechte Vorderradaufhängung (14R);
eine linke Vorderradaufhängung (14L); und
eine obere Brücke (12), welche die rechte Vorderradaufhängung (14R) und die linke Vorderradaufhängung (14L) verbindet;
das Messgerät (31) ist weiter vorne als die obere Brücke (12) in Längsrichtung (X) des Spreiz-Sitz-Fahrzeugs angeordnet;
wenn die Trägereinheit (40) in der zweiten Form (F2) ist, ist die obere Fläche (31a) des Messgeräts (31) in einer Seitenansicht des Spreiz-Sitz-Fahrzeugs (1) im Wesentlichen parallel zu einer oberen Fläche (12a) der oberen Brücke (12).

15. Das Spreiz-Sitz-Fahrzeug (1) gemäß Anspruch 14, wobei, wenn die Trägereinheit (40) in der zweiten Form (F2) ist, liegt die obere Fläche (31a) des Messgeräts (31) im Wesentlichen auf einer Verlängerung (E) der obere Fläche (12a) der oberen Brücke (12), in der Seitenansicht des Spreiz-Sitz-Fahrzeugs (1).

16. Das Spreiz-Sitz-Fahrzeug (1) gemäß irgendeinem der Ansprüche 1 bis 15, das einen Kraftstofftank (23), der hinter der Lenkvorrichtung (11) in Längsrichtung (X) des Spreiz-Sitz-Fahrzeugs und in einer Seitenansicht des Spreiz-Sitz-Fahrzeugs (1) angeordnet ist;
wobei, wenn die Trägereinheit (40) in der ersten Form (F1) ist, zumindest ein Teil des Messgeräts (31) höher als ein oberes Ende (Tf) des Kraftstofftanks (23) in Aufwärts-Abwärts-Richtung (Z) des Spreiz-Sitz-Fahrzeugs und in der Seitenansicht des Spreiz-Sitz-Fahrzeugs (1) angeordnet ist; und
wenn die Trägereinheit (40) in der zweiten Form (F2) ist, das Ganze von dem Messgerät (31) tiefer als das obere Ende (Tf) des Kraftstofftanks (23) in Aufwärts-Abwärts-Richtung (Z) des Spreiz-Sitz-Fahrzeugs und in der Seitenansicht des Spreiz-Sitz-Fahrzeugs (1) angeordnet ist.

17. Das Spreiz-Sitz-Fahrzeug (1) gemäß irgendeinem der Ansprüche 1 bis 16, das einen Scheinwerfer (33), der niedriger in Aufwärts-Richtung (Z) des Spreiz-Sitz-Fahrzeugs und weiter vorne in Längsrichtung (X) des Spreiz-Sitz-Fahrzeugsangeordnet ist als das Messgerät (31);
wobei, wenn die Trägereinheit (40) in der ersten Form (F1) ist, das Messgerät (31) und der Scheinwerfer (33) einander in einer Frontansicht des Spreiz-Sitz-Fahrzeugs (1) überlappen;
wenn die Trägereinheit (40) in der zweiten Form (F2) ist, das Messgerät (31) und der Scheinwerfer (33) einander in der Frontansicht des Spreiz-Sitz-Fahrzeugs (1) überlappen;
eine Gesamtlänge (K2) des Messgeräts (31) und des Scheinwerfers (33) in Aufwärts-Abwärts-Richtung (Z) des Spreiz-Sitz-Fahrzeugs (1), wenn die Trägereinheit (40) in der zweiten Form (F2) ist, ist kürzer ist als eine Gesamtlänge (K1) des Messgeräts (31) und des Scheinwerfers (33) in Aufwärts-Abwärts-Richtung (Z) des Spreiz-Sitz-Fahrzeugs (1), wenn die Trägereinheit (40) in der ersten Form (F1) ist.

## Revendications

1. Véhicule à selle (1) comprenant :
un dispositif de direction (11),
une unité de soutien (40) supportée par le dispositif de direction (11) pouvant se transformer entre une première forme (F1) et une seconde forme (F2), et
un compteur (31) supporté par l'unité de soutien (40),
dans lequel l'unité de soutien (40) inclut :
un premier support (41, 101) fixé à l'un du dispositif de direction (11) et du compteur (31),
un second support (51, 111) fixé à l'autre du dispositif de direction (11) et du compteur (31) et fixable au premier support (41, 101) et détachable de celui-ci, et
une unité de raccordement (61) destinée à réunir le premier support (41, 101) et le second support (51, 111),
le premier support (41, 101) inclut :
un premier point d'appui (42, 102) formé sur un premier plan (P1), et
un deuxième point d'appui (44, 104) formé sur un second plan (P2) différent du premier plan (P1),
lorsque l'unité de soutien (40) se trouve dans la première forme (F1), le premier point d'appui (42, 102) réalise un contact de surface avec le second support (51, 111) et l'unité de raccordement (61) assemble le premier point d'appui (42, 102) et le second support (51, 111),
lorsque l'unité de soutien (40) se trouve dans la seconde forme (F2), le deuxième point d'appui (44, 104) réalise un contact de surface avec le second support (51, 111) et l'unité de raccordement (61) assemble le deuxième point d'appui (44, 104) et le second support (51, 111), et
l'inclinaison du compteur (31) lorsque l'unité de soutien (40) se trouve dans la seconde forme (F2) est différente de l'inclinaison du compteur (31) lorsque l'unité de soutien (40) se trouve dans la première forme (F1).

2. Véhicule à selle (1) selon la revendication 1, dans lequel :
lorsque l'unité de soutien (40) se trouve dans la première forme (F1), le premier plan (P1) est parallèle à une direction transversale (Y) du véhicule à selle (1), et
lorsque l'unité de soutien (40) se trouve dans la seconde forme (F2), le second plan (P2) est parallèle à la direction transversale (Y) du véhicule à selle (1).

3. Véhicule à selle (1) selon la revendication 1 ou la revendication 2, dans lequel l'unité de raccordement (61) inclut :
une première tige (64A) qui pénètre dans le premier support (41, 101) et le second support (51, 111), et
une seconde tige (64B) qui pénètre dans le premier support (41, 101) et le second support (51, 111),
lorsque l'unité de soutien (40) se trouve dans la première forme (F1), la première tige (64A) et la seconde tige (64B) sont disposées dans la direction transversale (Y) du véhicule à selle (1), et la première tige (64A) et la seconde tige (64B) s'étendent respectivement dans une première direction (D1) perpendiculaire à la direction transversale (Y) du véhicule à selle (1), et
lorsque l'unité de soutien (40) se trouve dans la seconde forme (F2), la première tige (64A) et la seconde tige (64B) sont disposées dans la direction transversale (Y) du véhicule à selle (1), et la première tige (64A) et la seconde tige (64B) s'étendent respectivement dans une seconde direction (D2) perpendiculaire à la direction transversale (Y) du véhicule à selle (1).

4. Véhicule à selle (1) selon la revendication 3, dans lequel, lorsque la première tige (64A) et la seconde tige (64B) sont respectivement retirées du premier support (41, 101) et du second support (51, 111), le raccordement du premier support (41, 101) et du second support (51, 111) est supprimé, ce qui autorise au second support (51, 111) un mouvement libre par rapport au premier support (41, 101).

5. Véhicule à selle (1) selon l'une quelconque des revendications 1 à 4, dans lequel le premier support (41, 101) inclut :
des premiers alésages (43, 103) formés dans le premier point d'appui (42, 102), et
des seconds alésages (45, 105) formés dans le deuxième point d'appui (44, 104),
lorsque l'unité de soutien (40) se trouve dans la première forme (F1), l'unité de raccordement (71) est insérée dans les premiers alésages (43, 103),
lorsque l'unité de soutien (40) se trouve dans la seconde forme (F2), l'unité de raccordement (61) est insérée dans les seconds alésages (45, 105), et
les premiers alésages (43, 103) et les seconds alésages (45, 105) sont séparés les uns des autres par le premier point d'appui (42, 102) et le deuxième point d'appui (44, 104) .

6. Véhicule à selle (1) selon l'une quelconque des revendications 1 à 5, dans lequel le second support (51, 111) inclut un troisième point d'appui (52, 112),
lorsque l'unité de soutien (40) se trouve dans la première forme (F1), le premier point d'appui (42, 102) réalise un contact de surface avec le troisième point d'appui (52, 112) et l'unité de raccordement (61) assemble le troisième point d'appui (52, 112) au premier point d'appui (42, 102), et
lorsque l'unité de soutien (40) se trouve dans la seconde forme (F2), le deuxième point d'appui (44, 104) réalise un contact de surface avec le troisième point d'appui (52, 112) et l'unité de raccordement (61) assemble le troisième point d'appui (52, 112) au deuxième point d'appui (44, 104).

7. Véhicule à selle (1) selon la revendication 6, dans lequel :
le premier support (41, 101) est constamment fixé au dispositif de direction (11), et
le second support (51, 111) est fixé au compteur (31).

8. Véhicule à selle (1) selon la revendication 6, dans lequel :
le premier support (41, 101) est fixé au compteur (31), et
le second support (51, 111) est constamment fixé au dispositif de direction (11).

9. Véhicule à selle (1) selon l'une quelconque des revendications 1 à 5, dans lequel le second support (51, 111) inclut :
un troisième point d'appui (52, 112), et
un quatrième point d'appui (54),
lorsque l'unité de soutien (40) se trouve dans la première forme (F1), le premier point d'appui (42, 102) réalise un contact de surface avec le troisième point d'appui (52, 112) et l'unité de raccordement (61) assemble le troisième point d'appui (52, 112) au premier point d'appui (42, 102), et
lorsque l'unité de soutien (40) se trouve dans la seconde forme (F2), le deuxième point d'appui (44, 104) réalise un contact de surface avec le quatrième point d'appui (54) et l'unité de raccordement (61) assemble le quatrième point d'appui (54) au deuxième point d'appui (44, 104).

10. Véhicule à selle (1) selon la revendication 9, dans lequel :
le premier support (41, 101) est fixé au dispositif de direction (11), et
le second support (51, 111) est fixé au compteur (31).

11. Véhicule à selle (1) selon la revendication 9 ou la revendication 10, dans lequel :
le deuxième point d'appui (44, 104) est en contact avec le premier point d'appui (42, 102),
le quatrième point d'appui (54) est en contact avec le troisième point d'appui (52, 112), et
un premier angle (θ3) formé entre le premier point d'appui (42, 102) et le deuxième point d'appui (44, 104) est différent d'un second angle (θ4) formé entre le troisième point d'appui (52, 112) et le quatrième point d'appui (54).

12. Véhicule à selle (1) selon la revendication 11, dans lequel :
le premier point d'appui (42, 102) s'étend vers l'avant dans la direction longitudinale (X) du véhicule à selle,
le deuxième point d'appui (44, 104) s'étend vers le bas depuis le premier point d'appui (42, 102) dans la direction haut bas (Z) du véhicule à selle,
lorsque l'unité de soutien (40) se trouve dans la première forme (F1), le troisième point d'appui (52, 112) est en contact avec la surface supérieure (42a) du premier point d'appui (42, 102) dans la direction haut bas (Z) du véhicule à selle, et le quatrième point d'appui (54) est situé plus vers l'avant que la surface avant (44a) du deuxième point d'appui (44, 104) dans la direction longitudinale (X) du véhicule à selle,
lorsque l'unité de soutien (40) se trouve dans la seconde forme (F2), le quatrième point d'appui (54) est en contact avec la surface avant (44a) du deuxième point d'appui (44, 104) dans la direction longitudinale (X) du véhicule à selle, et le troisième point d'appui (52, 112) est situé plus vers le haut que la surface supérieure (42a) du premier point d'appui (42, 102) dans la direction haut bas (Z) du véhicule à selle, et
le second angle (θ4) est supérieur au premier angle (θ3).

13. Véhicule à selle (1) selon l'une quelconque des revendications 1 à 12, dans lequel :
le compteur (T1) possède une surface supérieure (31a) dans la direction haut bas (Z) du véhicule à selle,
l'inclinaison de la surface supérieure (31a) du compteur (31), lorsque l'unité de soutien (40) se trouve dans la seconde forme (F2), est plus proche de l'horizontale que l'inclinaison de la surface supérieure (31a) du compteur (31) lorsque l'unité de soutien (40) se trouve dans la première forme (F1).

14. Véhicule à selle (1) selon la revendication 13, dans lequel le dispositif de direction (11) inclut :
une suspension avant droite (14R),
une suspension avant gauche (14L), et
un chevalet supérieur (12) reliant la suspension avant droite (14R) et la suspension avant gauche (14L),
le compteur (31) est situé plus à l'avant que le chevalet supérieur (12) dans la direction longitudinale (X) du véhicule à selle,
lorsque l'unité de soutien (40) se trouve dans la seconde forme (F2), la surface supérieure (31a) du compteur (31) est pratiquement parallèle à la surface supérieure (12a) du chevalet supérieur (12) selon une vue latérale du véhicule à selle (1).

15. Véhicule à selle (1) selon la revendication 14, dans lequel, lorsque l'unité de soutien (40) se trouve dans la seconde forme (F2), la surface supérieure (31a) du compteur (31) est située pratiquement sur une extension (E) de la surface supérieure (12a) du chevalet supérieur (12) selon la vue latérale du véhicule à selle (1).

16. Véhicule à selle (1) selon l'une quelconque des revendications 1 à 15, comprenant un réservoir de carburant (23) situé derrière le dispositif de direction (11) dans la direction longitudinale (X) du véhicule à selle est selon une vue latérale du véhicule à selle (1),
dans lequel, lorsque l'unité de soutien (40) se trouve dans la première forme (F1), au moins une partie du compteur (31) est située plus haut que l'extrémité supérieure (Tf) du réservoir de carburant (23) dans la direction haut bas (Z) du véhicule à selle selon la vue latérale du véhicule à selle (1), et
dans lequel, lorsque l'unité de soutien (40) se trouve dans la seconde forme (F2), la totalité du compteur (31) est située plus bas que l'extrémité supérieure (Tf) du réservoir de carburant (23) dans la direction haut bas (Z) du véhicule à selle selon la vue latérale du véhicule à selle (1).

17. Véhicule à selle (1) selon l'une quelconque des revendications 1 à 16, comprenant un bloc optique (33) situé plus bas dans la direction haut bas (Z) du véhicule à selle et plus à l'avant dans la direction longitudinale (X) du véhicule à selle que le compteur (31),
dans lequel, lorsque l'unité de soutien (40) se trouve dans la première forme (F1), le compteur (31) et le bloc optique (33) se chevauchent selon une vue avant du véhicule à selle (1),
lorsque l'unité de soutien (40) se trouve dans la seconde forme (F2), le compteur (31) et le bloc optique (33) se chevauchent selon la vue avant du véhicule à selle (1),
la longueur totale (K2) du compteur (31) et du bloc optique (33) dans la direction haut bas (Z) du véhicule à selle (1), lorsque l'unité de soutien (40) se trouve dans la seconde forme (F2), est plus courte que la longueur totale (K1) du compteur (31) et du bloc optique (33) dans la direction haut bas (Z) du véhicule à selle (1) lorsque l'unité de soutien (40) se trouve dans la première forme (F1).
